# EUROPÄISCHE PATENTSCHRIFT

(11) **EP 4 722 638 B1**
(45) Veröffentlichungstag und Bekanntmachung des Hinweises auf die Patenterteilung: **09.12.2026**
(21) Anmeldenummer: 24204341.2
(22) Anmeldetag: 02.10.2024
(51) Int. Cl.: G01B 5/00, G01B 5/008, G01B 21/04

(54) **VERFAHREN ZUM BETRIEB EINES KOORDINATENMESSGERÄTES SOWIE KOORDINATENMESSGERÄT**
METHOD FOR OPERATING A COORDINATE MEASURING MACHINE AND COORDINATE MEASURING MACHINE
PROCÉDÉ DE FONCTIONNEMENT D'UN APPAREIL DE MESURE DE COORDONNÉES ET APPAREIL DE MESURE DE COORDONNÉES

(43) Veröffentlichungstag der Anmeldung: 08.04.2026
(73) Patentinhaber: Hexagon Metrology GmbH, 35578 Wetzlar (DE)
(72) Erfinder: Kämmerer, Andreas, Wetzlar (DE)
(74) Vertreter: Knefel, Cordula

(56) Entgegenhaltungen:
- CN-B- 103 676 653
- CN-C- 100 595 707
- DE-A1- 4 038 779
- DE-B3- 102005 003 322
- DE-B3- 102014 005 664
- US-A- 4 714 400

## Beschreibung

Die Erfindung betrifft ein Verfahren zum Betrieb eines Koordinatenmessgerätes sowie ein Koordinatenmessgerät.

Zum Stand der Technik (CN 102298357 A) gehört ein CNC-Doppelachssynchronisationssteuerungsverfahren auf Feldbus-Basis. Gemäß diesem Stand der Technik wird ein Synchronisationsfehler als Abweichung von einer Ist-Position bestimmt. Es wird eine Differenz des Synchronisationsfehlers und der Ist-Position bestimmt. Darüber hinaus wird der sich ändernde Trend des Synchronisationsfehlers bestimmt. Der Synchronisationsfehler der beiden gemessenen Achsen wird als Eingangssignal verwendet und es wird eine Synchronisationsfehler-PID-Regelung verwendet, um die Drehzahlregelung der beiden synchronisierten Achsen durchzuführen. Darüber hinaus ist eine Steuersignalverteilungsstrategie aufgrund der Schleppfehler der beiden Achsen vorgesehen. Beide Achsen werden gleichzeitig abgeglichen. Der spezifische Kompensationsbeitrag jeder Achse hängt vom Schleppfehler der beiden Achsen ab. Dieses zum Stand der Technik gehörende Verfahren weist den Nachteil auf, dass beide Achsen gleichzeitig über eine Drehzahlregelung angesteuert werden, und dass dieses Verfahren sehr aufwendig ist.

Weiterhin gehört zum Stand der Technik (DE 10 2005 003 322 B3) ein Verfahren zum Bestimmen einer Raumkoordinate eines Messpunktes an einem Messobjekt. Gemäß diesem Verfahren werden lediglich eine Ist-Differenz und eine Geschwindigkeit bestimmt. Es ist lediglich ein Regelkreis vorgesehen und es werden beide Antriebe der Auflager mit einem gemeinsamen Synchronitätsregler angesteuert. Der gemeinsame Synchronitätsregler weist einen gemeinsamen Lageregler auf, der einen für beide Antriebe gemeinsamen Sollwert erzeugt und einen weiteren Synchronitätsregler, der aus dem gemeinsamen Sollwert einen individuellen Sollwert für jeden Antrieb erzeugt. Der gemeinsame Synchronitätsregler steuert die Verfahrbewegungen der beiden Auflager gewissermaßen entlang einer fiktiven Bewegungsachse, die zwischen den jeweiligen Bewegungsachsen der beiden Antriebe liegt. Ein Positionssollwert wird von dem gemeinsamen Lageregler entlang der fiktiven Bewegungsachse zwischen den beiden Antrieben angesteuert. Erst der zumindest eine weitere Synchronitätsregler sorgt unter Berücksichtigung der individuellen Eigenheiten jedes Antriebsweges dafür, dass die beiden Auflager individuell in eine Position entlang ihrer eigenen Bewegungsachsen gebracht werden, die so bemessen ist, dass die fiktive "Zwischenposition" dem Soll- bzw. Vorgabewert des gemeinsamen Lagereglers entspricht. Dieses zum Stand der Technik gehörende Verfahren weist den Nachteil auf, dass es relativ aufwendig ist.

Zum Stand der Technik (CN 115284072 A) gehört eine Werkbank mit einer ersten und einer zweiten Führungsschiene. Das Steuermodul ist mit einem ersten Motor und einem zweiten Motor verbunden. Das Steuermodul weist einen ersten Stromregler, einen ersten Encoder, einen ersten Geschwindigkeitsregler, einen zweiten Stromregler, einen zweiten Geschwindigkeitsregler und einen Positionsregler auf. Es ist lediglich eine Slave-Achse vorgesehen. Der Motor hat keine separate Lageregelung und die Positionskompensation wird aufgehoben. Dadurch wird die Verringerung der Genauigkeit der Hauptachse durch den Positionsausgleich der Nebenachse vermieden. Der zweite Motor ist nicht mit dem Positionsregler ausgestattet. Dieses zum Stand der Technik gehörende Verfahren weist den Nachteil auf, dass Bezug genommen wird auf den berechneten Drehzahlsollwert der ersten Achse. Durch die Vorschaltkennlinie vor dem Synchronitätsregler wird nur in einem kleinen Drehzahlbereich eingegriffen.

Weiterhin gehört zum Stand der Technik (JP 2006011631 A) ein Servo-Kontrollsystem. Gemäß diesem Stand der Technik sind zwei Positionskontrollmittel der zwei Servo-Kontrollmittel vorgesehen. Es soll eine Positionskorrekturverstärkung mit einem Positionskorrekturkoeffizienten vorgenommen werden, die jedoch nicht beschrieben ist. Die Differenz der Positionsrückmeldung zwischen den beiden Achsen wird mit dem Positionskorrekturkoeffizienten multipliziert und zu dem Positionssollwert für die eine Achse addiert. Auf diese Weise wird die Positionsabweichung zwischen den beiden Achsen verringert. Dabei wird die Differenz der Drehzahlrückführung zwischen den beiden Achsen berechnet. Dieser Drehzahlwert wird durch Multiplikation mit einem Geschwindigkeitskorrekturkoeffizienten zu einem Drehzahlsollwert multipliziert. Auch gemäß diesem Stand der Technik wird die Drehzahl korrigiert. Dieses zum Stand der Technik gehörende Verfahren kann ebenfalls vereinfacht werden.

Darüber hinaus gehört zum Stand der Technik (EP 0 704 962 A1) eine Regelung für den relativen Gleichlauf von mechanisch gekoppelten Werkzeugmaschinenachsen. Gemäß diesem Stand der Technik ist ein gemeinsamer Drehzahlregler für sämtliche Achsen vorgesehen. Der Drehzahlregler erhält einen Sollwert von einem übergelagerten Lageregler. Der Lageistwert bestimmt sich aus dem arithmetischen Mittelwert aller Lageistwerte der einzelnen Achsen. Als Eingangsgröße werden die Positionsdifferenzen verwendet. Dieses zum Stand der Technik gehörende Verfahren weist den Nachteil auf, dass lediglich ein gemeinsamer Drehzahlregler für sämtliche Achsen vorgesehen ist.

Zum Stand der Technik (DE 10 2007 033 653 A1) gehört eine Anlage mit zumindest zwei geregelten Antrieben. Gemäß diesem Stand der Technik ist ebenfalls ein Drehzahlregler vorgesehen sowie Verzögerungsmittel. Die Antriebe sind als gleichwertige Antriebe ausgebildet. Es erfolgt eine Regelung auf Lagegleichheit. Die Lagedifferenz wird über die Geschwindigkeitsdifferenz ausgeregelt. Diese zum Stand der Technik gehörende Anlage kann hinsichtlich der Lageregelung weiter verbessert werden.

Weiterhin gehört zum Stand der Technik (DE 10 2014 005 664 B3) ein Koordinatenmessgerät und ein Verfahren zum Betrieb eines Koordinatenmessgerätes. Das Koordinatenmessgerät weist zwei Führungen mit einem ersten und einem zweiten Antrieb mit einem Positionsmesssystem auf. Gemäß diesem Stand der Technik enthält die Steuerung eine Kraftvorsteuerung, die in Abhängigkeit von der erfassten Position des zweiten Messschlittens und in Abhängigkeit von einer einzustellenden Sollbeschleunigung des ersten Messschlittens eine Ansteuerung des ersten Antriebes und/oder des zweiten Antriebes bewirkt. Die Kraftvorsteuerungseinheit kann den ersten Kraftvorsteuerungswert aus dem Produkt der Sollbeschleunigung mit einem ersten Proportionalitätsfaktor ermitteln und/oder den zweiten Kraftvorsteuerungswert aus dem Produkt der Sollbeschleunigung mit einem zweiten Proportionalitätsfaktor ermitteln. Gemäß diesem Stand der Technik ist ein vorgelagerter Kalibrierlauf vorgesehen. Der Mittelwert aus dem ersten Positionsmesswert und dem zweiten Positionsmesswert wird auf den ersten Lageregler zurückgekoppelt. Auch auf den ersten Geschwindigkeitsregler wird die zeitliche Ableitung des Mittelwertes rückgekoppelt. Die Lage des ersten Messschlittens wird nicht entlang nur einer Bewegungsachse des ersten Antriebes geregelt, sondern vielmehr entlang einer fiktiven Antriebsachse, da der jeweilige Positionsistwert als Mittelwert der beiden Positionsmesswerte der beiden Achsen vorgegeben wird. Auch bei diesem zum Stand der Technik gehörenden Verfahren kann die Genauigkeit in der Gleitphase weiter verbessert werden, da eine Synchronitätskorrektur lediglich einachsig über den zweiten Antriebsstrang per Hilfsregler erfolgt.

Das der Erfindung zugrunde liegende technische Problem besteht darin, ein Verfahren zum Betrieb eines Koordinatenmessgerätes sowie ein Koordinatenmessgerät anzugeben, mit dem eine verbesserte Synchronitätskorrektur durchgeführt werden kann.

Dieses technische Problem wird durch das Verfahren mit den Merkmalen gemäß Anspruch 1 sowie durch ein Koordinatenmessgerät mit den Merkmalen gemäß Anspruch 13 gelöst.

Das erfindungsgemäße Verfahren zum Betrieb eines Koordinatenmessgerätes
- mit einem Grundbett zur Lagerung eines zu vermessenden Werkstückes,
- mit einer Mechanik zur Bewegung eines Sensors in zumindest einer ersten Koordinatenrichtung und einer senkrecht dazu stehenden zweiten Koordinatenrichtung,
- wobei die Mechanik einen ersten und einen zweiten Portalfuß oder ein erstes und ein zweites Traversenlager umfasst, die entlang von zwei parallelen, auf gegenüberliegenden Seiten des Grundbettes angeordneten Führungen in der ersten Koordinatenrichtung geführt sind,
- wobei der erste Portalfuß oder das erste Traversenlager von einem ersten Antrieb und der zweite Portalfuß oder das zweite Traversenlager von einem zweiten Antrieb angetrieben werden,
- wobei die Antriebe von einer Steuerung mit wenigstens einem Synchronitätsregler gesteuert werden,
- bei dem eine Synchronisationsfehlerkorrektur der Antriebe des Koordinatenmessgerätes durchgeführt wird, zeichnet sich dadurch aus,
- dass an jedem Antrieb mit einem Messystem ein Positionsistwert des Antriebes erfasst wird,
- dass für den ersten Portalfuß oder das erste Traversenlager ein Schleppfehler aus einer Differenz zwischen einem Positionssollwert und dem Positionsistwert berechnet wird,
- dass für den zweiten Portalfuß oder das zweite Traversenlager ein Schleppfehler aus einer Differenz zwischen einem Positionssollwert und dem Positionsistwert berechnet wird,
- dass von der Steuerung eine Differenz aus den beiden Schleppfehlern berechnet wird,
- dass die Differenz aus den beiden Schleppfehlern mit einem vorgegebenen Differenzsollwert verglichen wird,
- und dass bei Überschreiten des Differenzsollwertes der Positionssollwert des wenigstens einen Antriebes geändert wird.

Die folgenden Ausführungen für den oder die Portalfüße beziehen sich gleichermaßen auch auf die Traversenlager, auch wenn diese nicht explizit genannt sind.

Die folgenden Ausführungen sind so zu verstehen, dass entweder zwei Portalfüße oder zwei Traversenlager vorhanden sind.

Bei zwei achsparallelen Achsen eines Koordinatenmessgerätes mit jeweils einem Antrieb pro Achse kann es trotz eines identischen Reglerdesigns für beide Achsen bei Vorgabe des gleichen Sollwertes zu unterschiedlichen Ist-Positionen kommen. Der Unterschied zwischen diesen Ist-Positionen führt zu einem Synchronitätsfehler zwischen beiden Achsen. Die Ursache, dass eine Achse im Vergleich zur anderen vor- oder nacheilt, liegt an den Toleranzen der mechanischen Streckenkomponenten. Trotz baugleicher Ausführungen der mechanischen Komponenten bewirken diese Toleranzen eine minimale Schwergängigkeit des einen Antriebsstranges im Vergleich zum anderen. Über die Messlänge gesehen kann sich die Schwergängigkeit der Achsen auch ändern, so dass eine leichtgängige und dadurch voreilende Achse zu einer schwergängigeren nacheilenden Achse wird.

Die Messlänge ist der Verfahrweg des Koordinatenmessgerätes in einer Achsrichtung.

Unter Achse werden die Bauteile des Koordinatenmessgerätes verstanden, die beim Antrieb der Bauteile einen Versatz in einem Positionssollwert zueinander haben.

Zu der Achse gehört bei dem Antrieb von zwei Portalfüßen oder zwei Traversenlagern einer der Portalfüße oder eines der Traversenlager. Darüber hinaus kann zu der Achse auch noch die Stütze des Portales, an der der Portalfuß angeordnet ist, gehören.

Gemäß dem erfindungsgemäßen Verfahren erkennt der Synchronitätsregler den Synchronitätsfehler anhand der Schleppfehlerdifferenz zwischen beiden Achsen und erhöht den Positionssollwert vorteilhaft nur für die nacheilende Achse. Dies geschieht vorteilhaft ab einem definierbaren Synchronitätsfehler, zum Beispiel 10 Mikrometern.

Das erfindungsgemäße Verfahren weist den Vorteil auf, dass der Synchronitätsfehler ohne das Hervorrufen von Hystereseeffekten minimiert werden kann.

Das erfindungsgemäße Verfahren verbessert die Synchronität zwischen zwei achsparallelen Achsen durch die Verwendung von zwei zusätzlichen Synchronitätsreglern, die zusätzlich zu den vorhandenen Reglern hinzugefügt werden. Bei den vorhandenen Reglern handelt es sich um wenigstens einen Synchronitätsregler für jeden Antrieb. Die vorhandenen Achsregler und die zusätzlich vorgesehenen Synchronitätsregler steuern die Achsen des Koordinatenmessgerätes.

Bei den vorhandenen Reglern handelt es sich um Strom-/ Geschwindigkeits- und Positionsregler für jede Achse. Bei den zusätzlich vorgesehenen Synchronitätsreglern handelt es sich wenigstens um einen Synchronitätsregler für jeden Antrieb.

Anhand der Schleppfehlerdifferenz der beiden Achsen wird ein Synchronitätsfehler berechnet. Dieser Synchronitätsfehler wird vorteilhaft durch nichtlineare Kennlinien in positive und negative Anteile zerlegt. Die Kennlinien enthalten vorteilhaft jeweils einen Bereich, in welchem bei kleinem Synchronitätsfehler eine Amplitude von 0 an die nachfolgenden Synchronitätsregler weitergeleitet wird. Dadurch wird der Eingriff der Synchronitätsregler, sofern der Synchronitätsfehler innerhalb des vorgegebenen Bereiches liegt, abgeschaltet und Hysterese zumindest weitestgehend vermieden.

In Abhängigkeit von einer positiven oder negativen Bewegung ändern sich die nichtlinearen Kennlinien vorteilhaft per Fallunterscheidung. Durch die beiden zusätzlichen Synchronitätsregler werden vorteilhaft die Positionssollwerte entweder von der einen Achse oder von der anderen Achse durch Aufschaltung des berechneten Reglerwertes auf den jeweiligen Positionsregler manipuliert. In Abhängigkeit der Bewegungsrichtung wird der Sollwert für eine Achse entweder erhöht oder erniedrigt.

Besonders vorteilhaft wird immer nur der Sollwert der nacheilenden Achse, das heißt der Achse mit dem höchsten Schleppfehler, geändert.

Das erfindungsgemäße Verfahren zum Betrieb eines Koordinatenmessgerätes weist den Vorteil auf, dass eine Reduktion oder eine Eliminierung der Hysterese möglich ist. Wird vorteilhaft direkt über den Drehzahlregler der Synchronitätsfehler der Achsen ausgeregelt, sind in der Regel beide Achsen im Eingriff. Es wird vorteilhaft von der einen Schiefstellung der Achsen auf die andere geregelt durch gleichzeitiges Erhöhen und Erniedrigen der Drehzahlen der einen oder der anderen Achse. Beim Ausregeln des Synchronitätsfehlers nach dem erfindungsgemäßen Verfahren über den Positionsregler wird der Synchronitätsfehler vorteilhaft nahe 0 innerhalb einer Totzone ausgeregelt. Es findet vorteilhaft nur ein minimaler Wechsel mit geringerer Amplitude von der einen Achsschiefstellung in die andere statt mit Ausregeln um die Totzone. Hysterese-Effekte werden dadurch weitestgehend verhindert, was die Messgenauigkeit des Koordinatenmessgerätes erhöht.

Eine gewollte Schiefstellung der beiden Achsen ist nur möglich, wenn auf eine Schleppfehlergleichheit geregelt wird, wie es mit dem erfindungsgemäßen Verfahren vorteilhaft durchgeführt wird. Sämtliche zum Stand der Technik gehörenden Verfahren arbeiten mit der Ist-Positionsdifferenz der Achsen und wirken über ihre Synchronitätsregler einer gewollten Schiefstellung der Achsen entgegen und ermöglichen diese nicht.

Ein weiterer Vorteil des erfindungsgemäßen Verfahrens liegt darin, dass die Regelung ruhiger und/oder exakter ist. Kleine Synchronisationsunterschiede der Achsen lassen sich ruhiger und/oder exakter mit dem erfindungsgemäßen Verfahren ausregeln als dies über die Drehzahlregelung möglich ist.

Für Koordinatenmessgeräte ist die Aufschaltung von Korrekturwerten über einen Lage-/Positionsregler vorteilhaft. Die Ausregelung erfolgt mit einem korrekt generierten Geschwindigkeitssignal als Ausgang des korrigierten Positionssollwertes.

Beim direkten Eingriff über die Drehzahlregler wird bei den zum Stand der Technik gehörenden Verfahren ein durch den Synchronitätsregler gewichtetes Ist-PositionsDifferenz-Signal zur Korrektur eines Drehzahlsollwertes verwendet. Dies ist jedoch nicht identisch zum Geschwindigkeitssignal, welches aus der Theorie verwendet werden müsste, um eine gewünschte Ist-Differenz auszuregeln. Insofern wird durch diese Art der Regelung über den oder die Drehzahlregler ein Fehler gemacht, der das Ausregeln kleiner Synchronitätsfehler erschwert.

Sofern hohe Drehmomente auf die Achse wirken, beispielsweise bei Dreh-/Fräsmaschinen, ist die Verwendung des Drehzahlreglers zur Synchronitätskompensation schneller. Bei Koordinatenmessgeräten kommt dieser Fall jedoch nicht vor. Bedingt durch Luftlager sind die Drehmomente gering.

Der Einsatz des beschriebenen Verfahrens bei Verwendung bei einachsig angetriebenen Portalen mit zwei Portalfüßen oder zwei Traversenlagern und mit zwei Maßstäben ist prinzipiell auch möglich, ist jedoch von den Ansprüchen nicht umfasst.

Weiterer Vorteil des erfindungsgemäßen Verfahrens ist eine Korrektur bei einem Not-Stopp. Das erfindungsgemäße Verfahren weist im Falle einer Kollision den Vorteil auf, dass im Falle einer Kollision einachsig nur die fehlerfreie Achse, welche in diesem Fall den höheren Schleppfehler hat, zurückgefahren wird. Der Synchronitätsregler muss nicht gezielt abgeschaltet werden, da der Synchronitätsregler keine Sollwerte zum Einfahren in das Bauteil der fehlerbehafteten Achse erzeugt. Dies kann mit keinem Verfahren erreicht werden, welches parallel zweiachsig eingreift. In diesem Fall wird die Achse, die in Kollision steht, in das Bauteil reinfahren, während die andere zurückfährt. Das bedeutet, dass das erfindungsgemäße Verfahren den Vorteil aufweist, dass bei einem Not-Stopp der Synchronitätsregler nicht gezielt abgeschaltet werden muss.

Gemäß einer vorteilhaften Ausführungsform wird der Positionssollwert des ersten Antriebes und/oder der Positionssollwert des zweiten Antriebes geändert.

Vorteilhaft wird immer nur der Positionssollwert der nacheilenden Achse, das heißt der Achse mit dem höchsten Schleppfehler, geändert. Nach einem Reglereingriff von einem der Synchronitätsregler oder über die Messlänge gesehen, kann die nacheilende Achse auch zur vorauseilenden Achse werden. In diesem Fall wird der Positionssollwert der anderen Achse durch den anderen Synchronitätsregler per Positionsgrößenaufschaltung erhöht werden.

Gemäß einer weiteren vorteilhaften Ausführungsform ist vorgesehen, dass die Differenz aus den beiden Schleppfehlern in einen ersten Synchronitätsregler des ersten Portalfußes oder des ersten Traversenlagers und/oder in einen zweiten Synchronitätsregler des zweiten Portalfußes oder des zweiten Traversenlagers von der Steuerung eingespeist wird.

Der Schleppfehler wird aus der Differenz zwischen einem Positionssollwert und dem Positionsistwert berechnet. Dieser Schleppfehler wird für den ersten Portalfuß oder das erste Traversenlager sowie für den zweiten Portalfuß oder das zweite Traversenlager berechnet. Aus diesen beiden Schleppfehlern wird vorteilhaft die Differenz gebildet und besonders vorteilhaft in den Synchronitätsregler des nacheilenden Portalfußes oder des nacheilenden Traversenlagers eingespeist. Hierdurch soll der Schleppfehler ausgeglichen werden.

Eine weitere vorteilhafte Ausführungsform der Erfindung sieht vor, dass der Schleppfehler des ersten Portalfußes oder des ersten Traversenlagers und der Schleppfehler des zweiten Portalfußes oder des zweiten Traversenlagers bestimmt werden, dass der Positionssollwert des Portalfußes oder des Traversenlagers, der oder das den größeren Schleppfehler aufweist, geändert wird, und dass der Positionssollwert des Portalfußes oder des Traversenlagers, der den kleineren Schleppfehler aufweist, gleichbleibend gehalten wird.

Gemäß dieser Ausführungsform ist vorgesehen, dass nur ein Synchronitätsregler im Eingriff ist und dass durch diese Regelung die nacheilende Achse, das heißt der nacheilende Portalfuß oder das Traversenlager, beschleunigt wird. Der Schleppfehler des anderen Portalfußes oder des anderen Traversenlagers, das heißt der Schleppfehler des Portalfußes oder des Traversenlagers, der oder das den kleineren Schleppfehler aufweist, wird vorteilhaft gleichbleibend gehalten. Der Schleppfehler des Portalfußes oder des Traversenlagers, der oder das den kleineren Schleppfehler aufweist, wird vorteilhaft nicht geändert. Es wird vorteilhaft nur die nacheilende Achse korrigiert und die vorauseilende Achse wird nicht korrigiert. Die vorauseilende Achse ist in diesem Fall die Führungsachse, die auch als Master bezeichnet wird. Grundsätzlich besteht die Möglichkeit, dass eine vorauseilende Achse zu einer nacheilenden Achse wird und umgekehrt.

Vorteilhaft soll sich die Achse mit dem größeren Schleppfehler so verhalten wie die Führungsachse. Aus diesem Grund wird vorteilhaft durch den Synchronitätsregler die Achse mit dem größeren Schleppfehler beschleunigt. Diese Achse wird auch als Folgeachse oder Slave-Achse bezeichnet.

Die Verhältnisse zwischen der vor- und nacheilenden Achse können sich auch ändern, so dass sich mit dem beschriebenen Regelungskonzept vorteilhaft ein wechselseitiges Master-Slave-Prinzip ergibt.

Gemäß einer vorteilhaften Ausführungsform der Erfindung ist vorgesehen, dass die Schleppfehler des ersten und des zweiten Portalfußes oder des ersten und des zweiten Traversenlagers kontinuierlich während des Verfahrens der beiden Portalfüße oder der zwei Traversenlager bestimmt werden und dass der Positionssollwert des Portalfußes oder des Traversenlagers geändert wird, der aktuell den größeren Schleppfehler aufweist. Hierdurch wird der nacheilende Portalfuß oder das nacheilende Traversenlager oder die nacheilende Achse beschleunigt, um vorteilhaft den Schleppfehler der nacheilenden Achse auszugleichen.

Gemäß einer weiteren vorteilhaften Ausführungsform der Erfindung ist vorgesehen, dass von dem ersten oder dem zweiten Synchronitätsregler die Positionssollwerte entweder von dem ersten Portalfuß oder von dem zweiten Portalfuß geändert werden, oder dass von dem ersten oder dem zweiten Synchronitätsregler (Gr1(s), Gr2(s)) die Positionssollwerte entweder von dem ersten Traversenlager oder von dem zweiten Traversenlager geändert werden.

Für den ersten Portalfuß oder das erste Traversenlager ist vorteilhaft ein erster Synchronitätsregler und für den zweiten Portalfuß oder für das zweite Traversenlager ist vorteilhaft ein zweiter Synchronitätsregler zusätzlich zu den ohnehin vorhandenen Achsreglern vorgesehen. Bei den vorhandenen Synchronitätsreglern handelt es sich um wenigstens einen Regler für jeden Antrieb. Bei den vorhandenen Achsreglern handelt es sich um Strom-, Geschwindigkeits- und/oder Positionsregler. Bei den hinzugefügten Synchronitätsreglern handelt es sich vorteilhaft um wenigstens einen Synchronitätsregler pro Antrieb.

Von diesen Synchronitätsreglern werden die Positionssollwerte des jeweils zugehörigen Portalfußes oder des jeweils zugehörigen Traversenlagers geändert. Diese Ausführungsform weist den Vorteil auf, dass nur ein Synchronitätsregler im Eingriff mit dem zugehörigen Antrieb des Portalfußes oder des Traversenlagers ist. Es wird gemäß dieser Ausführungsform lediglich entweder der Positionssollwert des ersten Portalfußes oder des ersten Traversenlager oder der Positionssollwert des zweiten Portalfußes oder des zweiten Traversenlager geändert, und zwar vorteilhaft der Positionssollwert des nacheilenden Portalfußes oder Traversenlagers.

Gemäß einer weiteren vorteilhaften Ausführungsform der Erfindung ist vorgesehen, dass die Positionssollwerte durch den jeweiligen dem ersten oder dem zweiten Portalfuß oder durch den jeweiligen dem ersten oder dem zweiten Traversenlager zugeordneten Synchronitätsregler durch Einspeisen eines Korrekturwertes in einen Positionsregler des ersten oder in einen Positionsregler des zweiten Portalfußes geändert werden oder durch Einspeisen eines Korrekturwertes in einen Positionsregler des ersten oder in einen Positionsregler des zweiten Traversenlagers geändert werden.

Diese Ausführungsform weist den Vorteil auf, dass jeweils ein Synchronitätsregler des ersten oder des zweiten Portalfußes oder des ersten oder des zweiten Traversenlagers einen Korrekturwert in einen Positionsregler des jeweiligen Portalfußes oder des jeweiligen Traversenlagers einspeist und die Positionssollwerte auf diese Art und Weise geändert werden.

Die bisher genannten Ausführungsformen können auch als 2-Achs-Synchronitätsregler mit einem wechselseitigen Master-Slave-Prinzip bezeichnet werden.

Das erfindungsgemäße Verfahren kann auch für einen 1-Achs-Synchronitätsregler ausgebildet sein.

Gemäß einer weiteren vorteilhaften Ausführungsform der Erfindung ist vorgesehen, dass durch Messungen der eine Portalfuß oder das eine Traversenlager bestimmt wird, der oder das über einen vorgegebenen Verfahrweg im Mittel den größeren Schleppfehler aufweist und dass ausschließlich der Positionssollwert des Portalfußes oder des Traversenlagers mit dem im Mittel größeren Schleppfehler mittels des Synchronitätsreglers geändert wird.

Diese Ausführungsform weist den Vorteil auf, dass eine vereinfachte Synchronitätsregelung vorgesehen ist. Durch Messungen wird zuerst diejenige Achse bestimmt, die über die gesamte Messlänge den größeren Schleppfehler aufweist oder stets oder hauptsächlich der anderen Achse nacheilt. Die Achse, die hauptsächlich der anderen Achse nacheilt, eilt beispielsweise zu mehr als 50% des gesamten möglichen Verfahrweges der anderen Achse nach.

Die nacheilende Achse soll sich vorteilhaft der anderen Achse im Führungsverhalten annähern. Die nacheilende Achse ist die sogenannte Slave-Achse, für welche über den Synchronitätsregler der Positionssollwert permanent manipuliert wird. Diese Form des Synchronitätsreglers lässt sich sowohl für die eine Achse als auch für die andere Achse realisieren.

Gemäß einer weiteren vorteilhaften Ausführungsform der Erfindung ist vorgesehen, dass der Positionssollwert des einen Portalfußes oder des einen Traversenlagers ausschließlich erhöht und/oder der Positionssollwert des anderen Portalfußes oder des anderen Traversenlagers ausschließlich verringert wird.

Gemäß einer bevorzugten Ausführungsform wird der Positionssollwert des einen Portalfußes oder des einen Traversenlagers erhöht und der Positionssollwert des anderen Portalfußes oder des anderen Traversenlagers bleibt unverändert. Insbesondere wird vorteilhaft der Positionssollwert des nacheilenden Portalfußes oder d es nacheilenden Traversenlagers, erhöht.

Es besteht auch die Möglichkeit, dass der Positionssollwert des anderen Portalfußes oder des anderen Traversenlagers ausschließlich verringert wird. Gemäß dieser Ausführungsform besteht die Möglichkeit, dass der Positionssollwert des vorauseilenden Portalfußes oder des vorauseilenden Traversenlagers verringert wird und der nacheilende Portalfuß oder das nacheilende Traversenlager in Bezug auf den Positionssollwert unverändert bleibt.

Weiterhin besteht die Möglichkeit, dass der Positionssollwert des einen Portalfußes oder des einen Traversenlagers ausschließlich erhöht und der Positionssollwert des anderen Portalfußes oder des anderen Traversenlagers ausschließlich verringert wird. Hier werden die Positionssollwerte der beiden Portalfüße oder die Positionssollwerte der beiden Traversenlager verändert.

Bei dieser Ausführungsform sind beide Achsen parallel im Eingriff, das heißt, die Synchronitätsregler beider Portalfüße oder beider Traversenlager sind aktiv, um den Synchronitätsfehler zu korrigieren. In diesem Fall wird keine Fallunterscheidung durchgeführt, welche Achse nacheilend ist. Es wird hierbei vorteilhaft eine Achse beschleunigt, während gleichzeitig die andere Achse gebremst wird. Vorteilhaft wird eine nichtlineare Reglerkennlinie verwendet, die eine hysteresefreie oder nahezu hysteresefreie Korrektur der Achsschiefstellung gewährleistet.

Gemäß einer weiteren vorteilhaften Ausführungsform ist vorgesehen, dass eine Änderung des Positionssollwertes des ersten und/oder des zweiten Portalfußes oder des ersten und/oder des zweiten Traversenlagers mit einer nichtlinearen Reglerkennlinie des ersten und/oder des zweiten Synchronitätsreglers durchgeführt wird.

Die nichtlineare Reglerkennlinie weist den Vorteil auf, dass eine hysteresefreie oder nahezu hysteresefreie Korrektur der Achsschiefstellung gewährleistet wird.

Gemäß einer weiteren vorteilhaften Ausführungsform weist die Reglerkennlinie wenigstens eine senkrechte und/oder wenigstens eine linear ansteigende Flanke auf.

Mit der senkrechten Flanke ist eine schnelle Regelung möglich. Eine linear ansteigende Flanke erzeugt eine sanftere Regelung. Die Regelung ist nicht so aggressiv wie bei einer senkrechten Flanke. Bei einer senkrechten Flanke kann ein Übersteuern auftreten, was zu einem Überschwingen führen kann.

Gemäß einer weiteren vorteilhaften Ausführungsform der Erfindung ist vorgesehen, dass berechnete Korrekturwerte des Positionssollwertes mit Verzögerungsgliedern n-ter Ordnung in wenigstens einem Positionsregler eingespeist werden, um Phasenverschiebungen, die durch zeitverzögertes mechanisches Ansprechen der beiden Portalfüße oder der beiden Traversenlager entstehen, zu verringern.

Vorteilhaft ist die Verzögerung vorgesehen, um ein Überregeln zu vermeiden. Wenn nach einer Verzögerung ein Schleppfehler vorhanden ist, wird vorteilhaft erst dann gegengesteuert. In dem Verzögerungszeitraum wird vorteilhaft keine Korrektur vorgenommen, um ein Überschwingen zu vermeiden.

Das erfindungsgemäße Verfahren kann zum einen als sogenanntes wechselseitiges Master-Slave-Prinzip durchgeführt werden. Hierbei ist die vorauseilende Achse, das heißt der vorauseilende Portalfuß oder das vorauseilende Traversenlager, der Master und die nacheilende Achse oder der nacheilende Portalfuß oder das nacheilende Traversenlagers ist der Slave. Vorteilhaft wird der Slave bezüglich des Positionssollwertes korrigiert.

Gemäß der anderen Variante der Erfindung ist vorteilhaft ein Vorlauf vorgesehen, bei dem gemessen wird, welche Achse oder welcher Portalfuß oder welches Traversenlager häufiger nachläuft. Der Positionssollwert dieser Achse oder dieses Portalfußes oder dieses Traversenlagers wird dann korrigiert.

Vorteilhaft ist die Reglerkennlinie so ausgebildet, dass bei kleinen Schleppfehlern keine Korrektur durchgeführt wird. Hier ist vorteilhaft eine sogenannte Totzone vorgesehen.

Der Vorteil bei der Bildung der Differenz der beiden Schleppfehler liegt darin, dass auch eine Schiefstellung des Portales über die Synchronitätsregler der Portalfüße oder eine Schiefstellung der Traverse über die Synchronitätsregler der Traversenlager geregelt werden kann.

Durch das Vorsehen der Totzeit kann hysteresefrei oder nahezu hysteresefrei geregelt werden.

Bei der Verzögerung der Korrektur sind vorteilhaft verschiedene Verzögerungszeiten vorgesehen. Die Verzögerungszeiten können vorteilhaft von der Anzahl der Abtastschritte abhängen. Vorteilhaft wird eine bestimmte Anzahl von Abtastschritten abgewartet, bevor eine Regelung stattfindet. Gemäß einer vorteilhaften Ausführungsform wird die Anzahl der Abtastschritte vor der Messung mit dem Koordinatenmessgerät festgelegt.

Vorteilhaft können fünf oder zehn Abtastschritte abgewartet werden, bevor eine Regelung durchgeführt wird. Es kann auch eine andere Anzahl von Abtastschritten festgelegt werden.

Gemäß einer weiteren vorteilhaften Ausführungsform der Erfindung ist vorgesehen, dass bei einer Achse eine Verzögerung vorgesehen wird und bei der anderen Achse immer eine Korrektur des Positionssollwertes vorgenommen wird.

Vorteilhaft erfolgt eine Regelung ab einem festgelegten Wert eines Synchronitätsfehlers. Dieser Synchronitätsfehler liegt vorteilhaft zwischen einem Mikrometer bis 100 Mikrometern. Ist eine lineare Flanke in der Reglerkennlinie vorgesehen, kann diese beispielsweise bis 50 Mikrometer ansteigen, wenn zum Beispiel der Bereich, in dem nicht geregelt wird, bis 10 Mikrometer reicht.

Gemäß einer vorteilhaften Ausführungsform der Erfindung ist vorgesehen, dass die Schleppfehler der beiden Achsen unterschiedliche Positionssollwerte aufweisen. In diesem Fall kann das Portal oder die Traverse in einer Schiefstellung verfahren werden.

Bei einem Not-Aus fährt in der Regel eine Achse nach vorne, während die andere Achse stehen bleibt. Gemäß dem erfindungsgemäßen Verfahren wird hierbei vorteilhaft nur eine Achse verfahren, nämlich die, die nachhängt. Dies wird bei dem Master-Slave-Prinzip durchgeführt.

Weist beispielsweise eine Achse eine höhere Reibung auf, können vorteilhaft zwei verschiedene Positionssollwerte für die beiden Portalfüße oder für die beiden Traversenlager angegeben werden.

Das erfindungsgemäße Koordinatenmessgerät in Portalbauweise oder Brückenbauweise
- mit einem Grundbett zur Lagerung eines zu vermessenden Werkstückes mit einer Mechanik zur Bewegung eines Sensors in zumindest einer ersten Koordinatenrichtung und einer senkrecht dazu stehenden zweiten Koordinatenrichtung,
- wobei die Mechanik bei dem Koordinatenmessgerät in Portalbauweise einen ersten und einen zweiten Portalfuß aufweist, die entlang von zwei parallelen auf gegenüberliegenden Seiten des Grundbettes angeordneten Führungen in der ersten Koordinatenrichtung verfahrbar gelagert sind, oder wobei die Mechanik bei dem Koordinatenmessgerät in Brückenbauweise ein erstes und ein zweites Traversenlager aufweist, die entlang von zwei parallelen auf gegenüberliegenden Seiten des Grundbettes auf einem Portal angeordneten Führungen in der ersten Koordinatenrichtung verfahrbar gelagert sind,
- wobei für den ersten Portalfuß ein erster Antrieb und für den zweiten Portalfuß ein zweiter Antrieb vorgesehen ist oder für das erste Traversenlager ein erster Antrieb und für das zweite Traversenlager ein zweiter Antrieb vorgesehen ist,
- wobei für die Antriebe eine Steuerung vorgesehen ist
- und wobei für jeden Antrieb wenigstens ein Synchronitätsregler vorgesehen ist,
zeichnet sich dadurch aus, dass die Steuerung jeweils wenigstens einen zusätzlichen Synchronitätsregler zur Regelung des Positionssollwertes für jeden Antrieb der beiden Portalfüße oder für jeden Antrieb der beiden Traversenlager aufweist.

Das erfindungsgemäße Koordinatenmessgerät ist in Portalbauweise oder in Brückenbauweise ausgebildet.

Bei einem Koordinatenmessgerät in Portalbauweise sind die Führungen für den ersten und den zweiten Portalfuß an dem Grundbett angeordnet sein. Die Führungen sind vorteilhaft in Höhe des Grundbettes angeordnet. Das Portal weist zwei Stützen auf, an deren unterem Ende jeweils ein Portalfuß angeordnet ist, und an deren oberen Ende eine Traverse fest angeordnet ist.

Bei dieser Ausführungsform wird das gesamte Portal mit den Portalfüßen, den Stützen und der Traverse verfahren.

Bei einem Koordinatenmessgerät in Brückenbauweise ist ein feststehendes Portal vorgesehen, welches beispielsweise ein U-Form aufweist. In dem aus dem Grundbett und den Portalstützen gebildeten U ist vorteilhaft das zu vermessende Werkstück angeordnet.

Die Traverse ist mit Traversenlagern an Führungen angeordnet, die auf dem Portal aufliegen. Die Führungen sind an den oberen Enden der Portalstützen angeordnet. Die Traverse wird verfahren. Das Portal ist vorteilhaft feststehend ausgebildet.

Bei beiden Ausführungsformen kann der Werkzeugtisch feststehend oder verfahrbar ausgebildet sein. Es kann auch ein Drehtisch vorgesehen sein.

Zu den in dem Koordinatenmessgerät vorgesehenen Achsreglern zur Regelung der Antriebe ist gemäß der Erfindung jeweils wenigstens ein zusätzlicher Synchronitätsregler zur Regelung des Positionssollwertes für jeden Antrieb der beiden Portalfüße oder für jeden Antrieb der Traversenlager vorteilhaft vorgesehen. Bei den vorhandenen Reglern handelt es sich um wenigstens einen Achsregler für jeden Antrieb. Diese Achsregler können Strom-, Geschwindigkeits- und/oder Positionsregler sein. Hierdurch können die verschiedenen Verfahren durchgeführt werden, nämlich zum Beispiel das wechselseitige Master-Slave-Prinzip oder es wird ein Vorlauf durchgeführt, bei dem gemessen wird, welche Achse häufiger nachläuft und es wird eine Korrektur dieser Achse durchgeführt.

Gemäß einer weiteren vorteilhaften Ausführungsform des erfindungsgemäßen Koordinatenmessgerätes ist vorgesehen, dass die zusätzlichen Synchronitätsregler als Positionssollwerte der Portalfüße oder der Traversenlager regelnde Synchronitätsregler ausgebildet sind.

Über die Regelung der Positionssollwerte der Portalfüße oder der Traversenlager kann die Achse, die den größeren Schleppfehler aufweist, korrigiert werden, indem vorteilhaft der Positionssollwert angepasst wird.

Gemäß einer weiteren vorteilhaften Ausführungsform der Erfindung ist vorgesehen, dass die zusätzlichen Synchronitätsregler nichtlineare Reglerkennlinien aufweisen. Durch die nichtlineare Reglerkennlinie ist vorgesehen, dass bei kleinen Schleppfehlern keine Korrektur durchgeführt wird. Das heißt, es ist vorteilhaft eine Totzone vorgesehen.

Durch das Vorsehen der Totzone kann hysteresefrei oder annähernd hysteresefrei geregelt werden.

Gemäß einer vorteilhaften Weiterbildung der Erfindung ist vorgesehen, dass die nichtlineare Reglerkennlinie eine Totzone ohne Regelung aufweist. Wie schon ausgeführt, kann durch das Vorsehen der Totzone hysteresefrei oder annährend hysteresefrei geregelt werden.

Eine weitere vorteilhafte Ausführungsform der Erfindung sieht vor, dass zwei Positionsencoder vorgesehen sind. Encoder eignen sich besonders gut für eine präzise Positionsbestimmung.

Das erfindungsgemäße Verfahren ist vorteilhaft bei sämtlichen Koordinatenmessgeräten anwendbar mit verschiedenen Sensoren, wie beispielsweise Tastköpfen oder optischen Sensoren oder Dreh-/Schwenkgelenken mit Tastköpfen oder Dreh-/Schwenkgelenken mit optischen Sensoren.

Das Verfahren ist einsetzbar bei Koordinatenmessgeräten mit Werkstücktischen oder auch mit auf den Werkstücktischen angeordneten Drehtischen.

Das erfindungsgemäße Verfahren ist vorteilhaft einsetzbar bei Koordinatenmessgeräten vom sogenannten Portaltyp wie auch bei Brückenkoordinatenmessgeräten.

Vorteilhaft wird ein sogenannter Messschlitten eingesetzt, der entlang von zwei parallelen Führungen in einer ersten Koordinatenrichtung geführt ist, die auf gegenüberliegenden Seiten der Werkstückauflage angeordnet sind, wobei der erste Messschlitten die Werkstückauflage überspannt. Ein solcher Messschlitten kann in sogenannten Brückenkoordinatenmessgeräten eingesetzt werden, bei denen seitlich des Werkstücktisches auf Stützen hochgelegte Führungen ruhen, wobei der erste Messschlitten diese beiden Führungen als Brücke miteinander verbindet. Auch bei Portalkoordinatenmessgeräten ist es bekannt, den ersten Messschlitten in Form eines Portals auszubilden, der die Werkstückauflage in einem zentralen Bereich überspannt. Die Stützen solcher portalartiger Messschlitten ruhen üblicherweise auf zwei Führungen, die seitlich der Werkstückauflage am Koordinatenmessgerät befestigt sind. Diese Führungen werden auch als Portalfüße bezeichnet.

Bei den Führungen kann es sich um unterschiedlichste Führungen handeln, wie zum Beispiel Luftlagerführungen, bei denen Luftlager auf einer ebenen Fläche gleiten. Es können auch Gleitführungen, Rollenführungen oder Kugelschienenführungen oder dergleichen vorgesehen sein.

Bei dem Antriebssystem können vorteilhaft elektromotorisch angetriebene Reibradantriebe oder beispielsweise Spindelantriebe eingesetzt werden. Vorteilhaft können auch Riemenantriebe oder Linearmotore vorgesehen sein. Bei den Positionsmesssystemen kann beispielsweise die Position des Messschlittens bei einem Spindelantrieb aus der Umdrehungszahl der Spindel ermittelt werden. Es besteht auch die Möglichkeit, optische Entfernungsmessungen beispielsweise über Interferometer durchzuführen. Alternativ oder zusätzlich besteht die Möglichkeit, als Positionsmesssysteme Maßstäbe, insbesondere Inkremental-Maßstäbe mit zugeordneten Ablesesensoren, die beispielsweise optisch, magnetisch, kapazitiv etc. sind, zu verwenden.

Auch bei der Steuerung können unterschiedliche Steuerungen eingesetzt werden. Die Steuerung kann beispielsweise als analoger Regelkreis aufgebaut sein. Vorteilhaft werden jedoch ein oder mehrere Mikroprozessoren eingesetzt, in denen die Synchronitätsregler als digitale Software hinterlegt sind.

Weitere Merkmale und Vorteile der Erfindung ergeben sich anhand der zugehörigen Zeichnungen, in denen verschiedene Ausführungsformen von Synchronitätsregelungen nur beispielhaft dargestellt sind, ohne die Erfindung auf diese Ausführungsbeispiele zu beschränken. In den Zeichnungen zeigen:
- Fig. 1: ein Koordinatenmessgerät in Portalbauweise in perspektivischer Ansicht;
- Fig. 2: eine Schaltung eines 2-Achs-Synchronitätsreglers mit wechselseitigem Master-Slave-Prinzip;
- Fig. 3: eine Schaltung eines 1-Achs-Synchronitätsreglers mit nichtlinearem Ansatz ohne Hysterese für die x1-Achse;
- Fig. 4a: eine Darstellung einer alternativen Kennlinie;
- Fig. 4b: eine Darstellung einer alternativen Kennlinie;
- Fig. 5: eine Schaltung eines 1-Achs-Synchronitätsreglers mit nichtlinearem Ansatz ohne Hysterese für die x2-Achse;
- Fig. 6a: eine Darstellung einer alternativen Kennlinie;
- Fig. 6b: eine Darstellung einer alternativen Kennlinie;
- Fig. 7: eine Schaltung eines 2-Achs-Synchronitätsreglers mit linearem Ansatz ohne Hysterese;
- Fig. 8: eine Schaltung eines 1-Achs-Synchronitätsreglers mit linearem Ansatz ohne Hysterese für die x1-Achse;
- Fig. 9: eine Schaltung eines 1-Achs-Synchronitätsreglers mit linearem Ansatz ohne Hysterese für die x2-Achse;
- Fig. 10: ein Koordinatenmessgerät in Brückenbauweise;
- Fig. 11: ein geändertes Ausführungsbeispiel eines Koordinatenmessgerätes in Brückenbauweise.

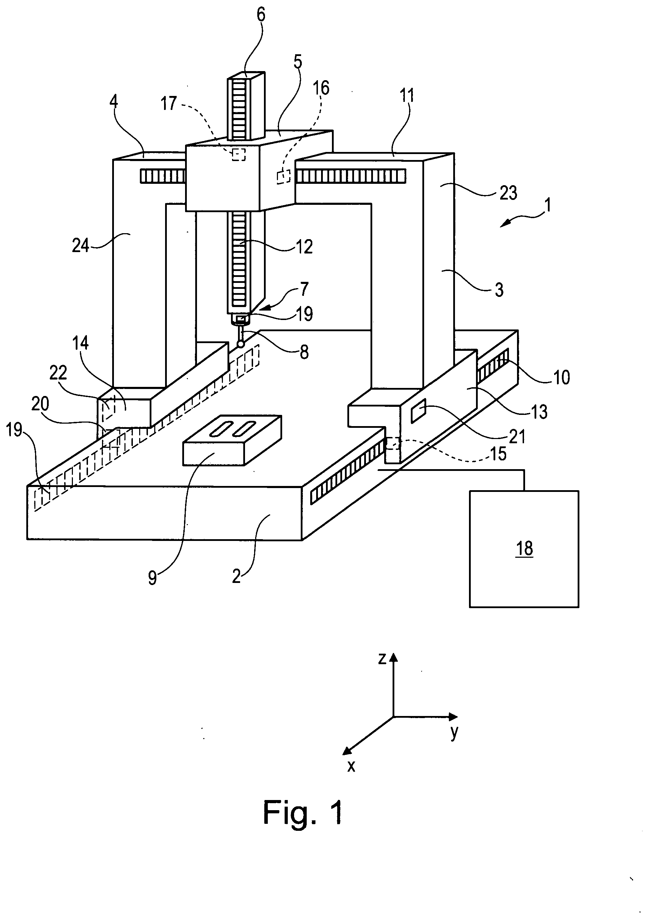

Fig. 1 zeigt ein Koordinatenmessgerät 1 mit einem Grundbett 2. An dem Grundbett ist in X-Richtung verschiebbar ein Portal 3 angeordnet. Das Portal 3 weist Stützen 23, 24 auf. An einer Traverse 4 des Portals 3 ist ein Schlitten 5 in Y-Richtung verschiebbar angeordnet. An dem Schlitten 5 ist eine in Z-Richtung verschiebbare Pinole 6 angeordnet. An der Pinole 6 ist ein Tastkopf 7 angeordnet, an dem wiederum ein Tastsensor, im vorliegenden Beispiel ein Taststift 8, angeordnet ist.

Auf dem Grundbett 2, welches den Werkstücktisch darstellt, ist ein Werkstück 9 zur Vermessung mit dem Koordinatenmessgerät 1 angeordnet.

Zur Erfassung der Positionen des Portals 3, des Schlittens 5 und der Pinole 6 sind Maßstäbe 10, 11, 12 vorgesehen. Der Maßstab 10 ist an dem Grundbett 2 angeordnet, der Maßstab 11 ist an der Traverse 4 des Portales 3 angeordnet und der Maßstab 12 ist an der Pinole 6 angeordnet. Das Portal 3 weist einen angetriebenen Portalfuß 13 auf und einen weiteren angetriebenen Portalfuß 14. Der Maßstab 10 erfasst die Position des angetriebenen Portalfußes 13. Ein weiterer Maßstab 19 erfasst die Position des Portalfußes 14. Den Maßstäben 10, 11, 12, 19 zugeordnet sind Gebervorrichtungen 15, 16, 17, 20, die lediglich schematisch dargestellt sind. Die Gebervorrichtung 15 ist in dem Portalfuß 13 angeordnet und wirkt mit dem Maßstab 10 zusammen. Die Gebervorrichtung 20 ist in dem Portalfuß 14 angeordnet und wirkt mit dem Maßstab 19 zusammen. Die Gebervorrichtung 17 ist in dem Schlitten 5 angeordnet und wirkt mit dem Maßstab 12 der Pinole 6 zusammen. Die Gebervorrichtung 16 ist an dem Schlitten 5 angeordnet und wirkt mit dem Maßstab 11 zusammen. Es ist eine Steuereinrichtung 18 vorgesehen, die lediglich schematisch dargestellt ist. Über die Steuereinrichtung 18 werden Antriebe 21, 22, die ebenfalls lediglich schematisch dargestellt sind, der Portalfüße 13, 14 geregelt. Der Antrieb 21 ist für den Portalfuß 13 vorgesehen. Der Antrieb 22 ist für den Portalfuß 14 vorgesehen. Die Portalfüße 13, 14 stehen mit den Stützen 23 , 24 in Verbindung.

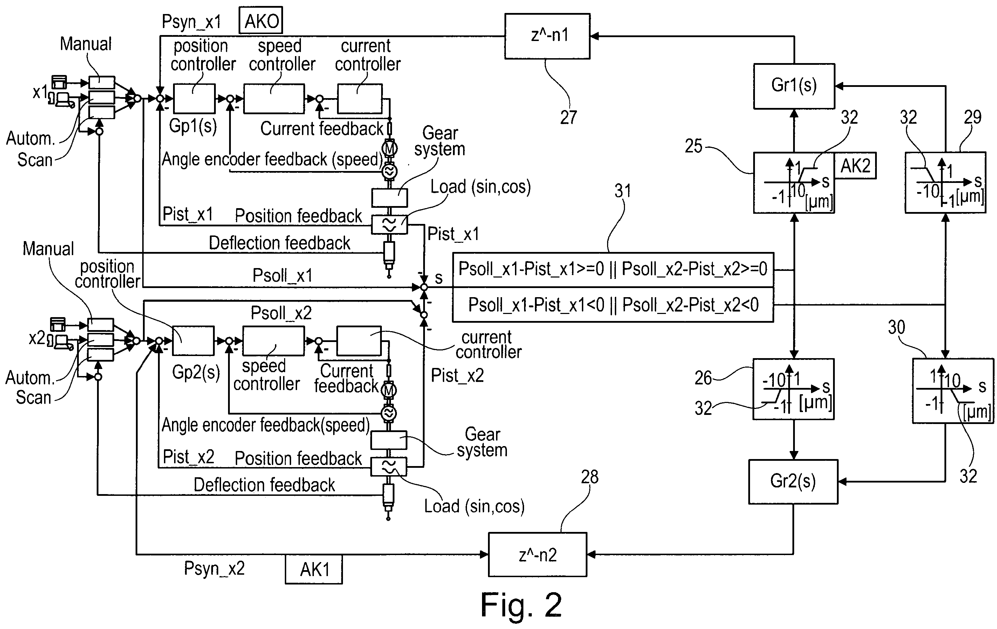

Fig. 2 zeigt einen 2-Achs-Synchronitätsregler für ein wechselseitiges Master-Slave-Prinzip. Es werden die Positionen der Portalfüße 13, 14 geregelt.

Mit dem erfindungsgemäßen Verfahren wird die Synchronität zwischen zwei achsparallelen Achsen x1, x2 geregelt durch die Verwendung von zwei Synchronitätsreglern Gr1(s) und Gr2(s).

Die Synchronitätsregler Gr1(s) und Gr2(s) sind zusätzlich zu weiteren Reglern, die für die Regelung von Antrieben vorgesehen sind, angeordnet.

Aus der Schleppfehlerdifferenz der Achsen x1 und x2 wird der Synchronitätsfehler s berechnet. Dieser Synchronitätsfehler s wird durch nichtlineare Kennlinien in positive und negative Anteile zerlegt.

Die Kennlinien enthalten jeweils einen Bereich, in welchem bei kleinem Synchronitätsfehler eine Amplitude von 0 an die nachfolgenden Synchronitätsregler weitergeleitet wird. Dadurch wird der Eingriff der Synchronitätsregler Gr1(s) und Gr2(s), sofern der Synchronitätsfehler innerhalb dieser Bereiche liegt, abgeschaltet und eine Hysterese wird vermieden. Die nichtlinearen Reglerkennlinien sind mit 25 und 26 bezeichnet.

Die Kennlinien 29 und 30 sind die nichtlinearen Kennlinien für Achsbewegungen in negativer Richtung.

Im vorliegenden Fall erfolgt eine Abschaltung bis ± 10 Mikrometern. Es können jedoch auch andere Bereich gewählt werden. In Abhängigkeit von einer positiven oder einer negativen Bewegung ändern sich die nichtlinearen Kennlinien per Fallunterscheidung.

Durch die Synchronitätsregler Gr1(s), Gr2(s) werden die Positionssollwerte Psoll_x1 und Psoll_x2 entweder von der Achse x1 oder von der Achse x2 durch Aufschaltung des berechneten Reglerwertes Psyn_x1 und Psyn_x2 auf den jeweiligen Positionsregler Gp1(s), Gp2(s) manipuliert. In Abhängigkeit der Bewegungsrichtung wird der Sollwert für eine Achse entweder erhöht oder verringert.

Es wird gemäß Fig. 2 nur der Sollwert der nacheilenden Achse, das heißt der Achse mit dem höchsten Schleppfehler, geändert. Nach dem Reglereingriff von einem der Synchronitätsregler Gr1(s), Gr2(s) oder über die Messlänge gesehen, kann die nacheilende Achse auch zur vorauseilenden Achse werden. In diesem Fall wird der Sollwert Psoll_x1, Psoll_x2 der anderen Achse durch den anderen Synchronitätsregler Gr1(s), Gr2(s) durch Positionsgrößenaufschaltung erhöht werden. Es ist in diesem Fall immer nur ein Synchronitätsregler Gr1(s), Gr2(s) im Eingriff, durch welchen die nacheilende Achse x1, x2 beschleunigt wird. Die vorauseilende Achse x2, x1 mit dem geringsten Schleppfehler ist die Führungsachse, die als Master bezeichnet wird.

Die Achse x1, x2 mit dem größeren Schleppfehler soll sich wie die Führungsachse verhalten und wird daher durch den Synchronitätsregler Gr1(s), Gr2(s) beschleunigt und ist somit die Folgeachse beziehungsweise Slave-Achse.

Die Verhältnisse zwischen der vor- und nacheilenden Achse x1, x2 können sich ändern, so dass mit diesem Regelungskonzept ein wechselseitiges Master-Slave-Prinzip möglich ist.

Durch den zweiachsigen Eingriff über beide Motore der Antriebe 21, 22 muss die Synchronitätsfehlerkorrektur mit minimaler Phasendifferenz zwischen bestimmten Sollwerten durch die Synchronitätsregler Gr1(s), Gr2(s) und einem IstWert der Position Pist_x1, Pist_x2 erfolgen. Phasenverschiebungen können durch zeitverzögertes mechanisches Ansprechen der einzelnen Achsen entstehen. Um diese kompensieren zu können und in idealer Weise phasengleiches oder näherungsweise phasengleiches Aufschalten des Korrekturwertes zu den Positionsistwerten Pist_x1, Pist_x2 zu ermöglichen, können die berechneten Korrekturwerte durch Verzögerungsglieder n-ter Ordnung z^-n1, z^-n2 verzögert werden.

z^-n1 ist eine andere Schreibweise für *z*^{*-n*1}. Dies bezieht sich auf sämtliche Schreibweisen mit Exponenten.

Für jede Achse ist ein Verzögerungsglied 27, 28 vorgesehen. Die nichtlinearen Kennlinienglieder weisen eine sogenannte Totzone auf. Diese Kennlinienglieder sind mit 29, 30 bezeichnet. Mit den Verzögerungsgliedern 27, 28 erfolgt eine Kompensation von Zeitverzögerungen in der Strecke. Mit der Fallunterscheidungsfunktion 31 wird eine Fallunterscheidung in positive und negative Bewegung vorgenommen.

Die nichtlinearen Kennlinienmitglieder 29, 30 weisen die Totzone auf. Liegt eine Abweichung des Schleppfehlers von beispielsweise weniger als 10 Mikrometern vor, wird keine Regelung durchgeführt.

Die in Fig. 2 dargestellten Kennlinien weisen lineare Flanken 32 auf. Hierdurch ist eine weichere Regelung als bei senkrechten Flanken möglich. Senkrechte Flanken sind jedoch auch möglich.

Durch diese Reglerkennlinien ist eine freie Bestimmung des Abschaltpunktes für beide Achsen möglich. Durch die nichtlinearen Reglerkennlinien ist eine freie Bestimmung der Steigung für beide Achsen möglich.

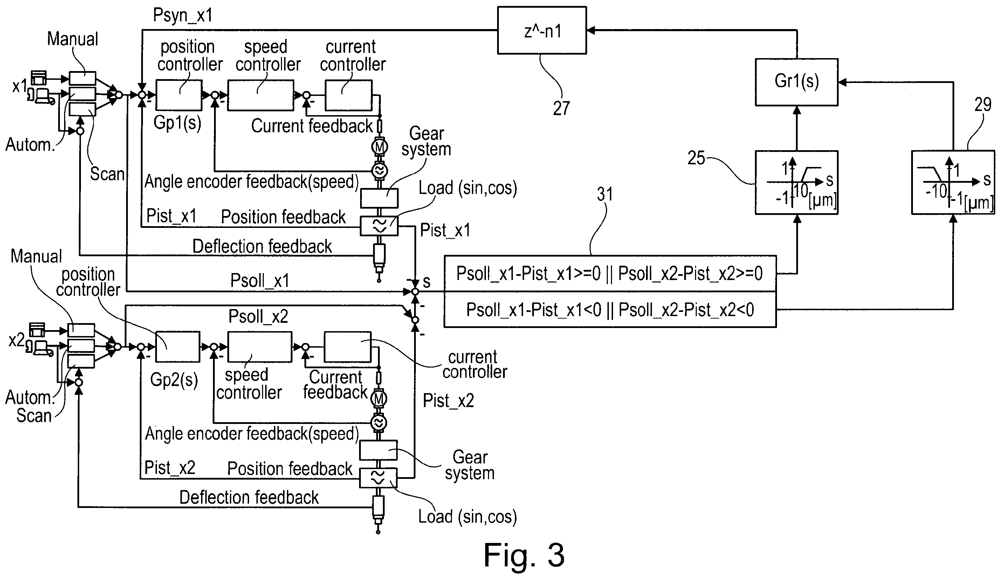

Fig. 3 zeigt ein weiteres Ausführungsbeispiel. Gleiche Teile sind mit gleichen Bezugszahlen versehen. In Fig. 3 ist ein vereinfachter Synchronitätsregler dargestellt, bei dem durch Messungen diejenige Achse x1, x2 bestimmt wird, die über die gesamte Messlänge den größeren Schleppfehler aufweist oder die ständig oder hauptsächlich der anderen Achse x1, x2 nacheilt. Die Achse, die hauptsächlich der anderen Achse nacheilt, eilt beispielsweise zu mehr als 50% des gesamten möglichen Verfahrweges der anderen Achse nach.

Die nacheilende Achse x1, x2 soll sich der anderen Achse x2, x1 im Führungsverhalten annähern. Die nacheilende Achse x1, x2 ist die Slave-Achse, für welche über den Synchronitätsregler Gr1(s) der Positionssollwert Psoll_x1, Psoll_x2 permanent manipuliert wird. Diese Form des Synchronitätsreglers lässt sich sowohl für die x1- als auch für die x2-Achse realisieren.

Der Synchronitätsregler gemäß Fig. 3 weist Kennlinienglieder 25, 29 auf. Diese Kennlinienglieder 25, 29 weisen schräge Flanken auf.

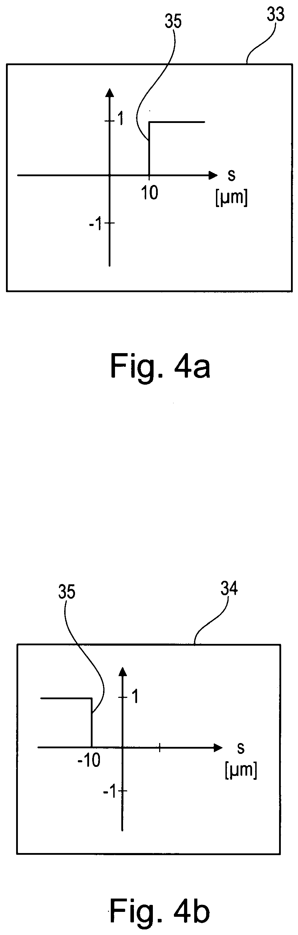

Fig. 4a, 4b zeigen alternative Kennlinien für den Synchronitätsregler gemäß Fig. 3. Diese Kennlinienglieder 33, 34 weisen gegenüber den Kennliniengliedern 25, 29 senkrechte Flanken 35 auf.

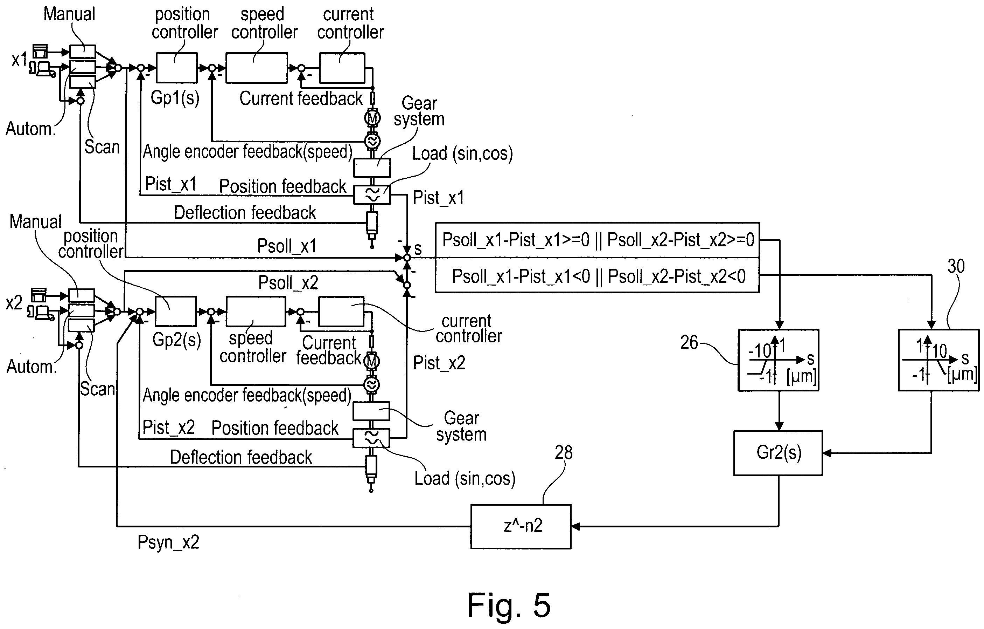

Fig. 5 zeigt einen weiteren Synchronitätsregler. Der Synchronitätsregler gemäß Fig. 3 ist für eine Regelung der Achse x1 vorgesehen. Der Synchronitätsregler gemäß Fig. 5 ist für die Regelung der Achse x2 vorgesehen.

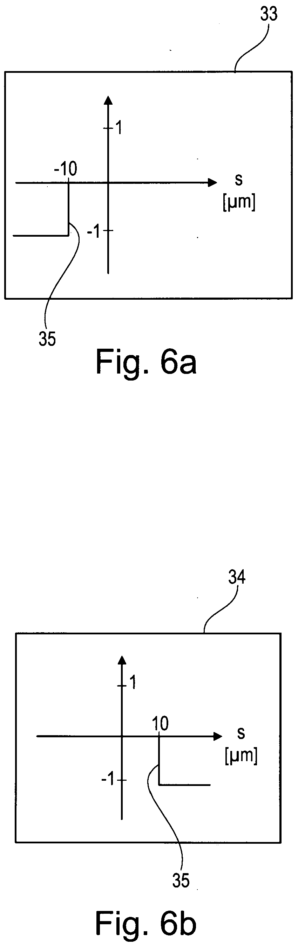

Alternative Kennlinien für den Synchronitätsregler gemäß Fig. 5 weisen die in den Fig. 6a und 6b dargestellten Kennlinienglieder 33, 34 auf.

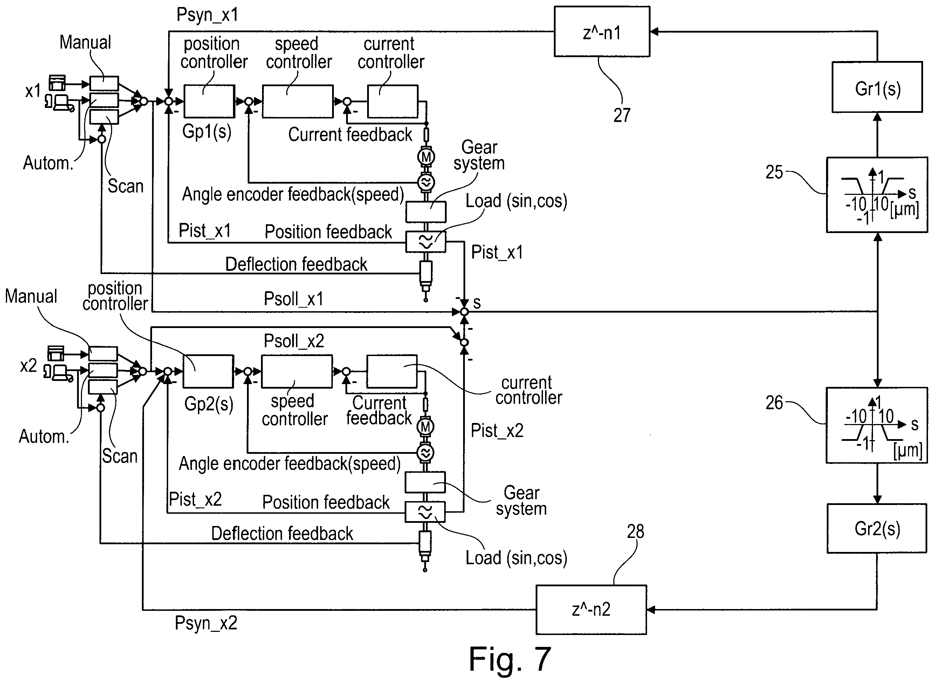

Fig. 7 zeigt ein weiteres Ausführungsbeispiel. Gleiche Teile sind mit gleichen Bezugszahlen versehen. Bei diesem Ausführungsbeispiel sind beide Achsen x1, x2 immer parallel im Eingriff, um den Synchronitätsfehler zu korrigieren. Hierbei findet keine Fallunterscheidung statt, welche Achse x1, x2 nacheilend ist. In diesem Fall wird immer die eine Achse x1, x2 beschleunigt, während gleichzeitig die andere Achse x2, x1 gebremst wird. Auch hier wird eine nichtlineare Reglerkennlinie 25, 26 verwendet, die eine hysteresefreie Korrektur oder nahezu hysteresefreie Korrektur der Achsschiefstellung gewährleistet.

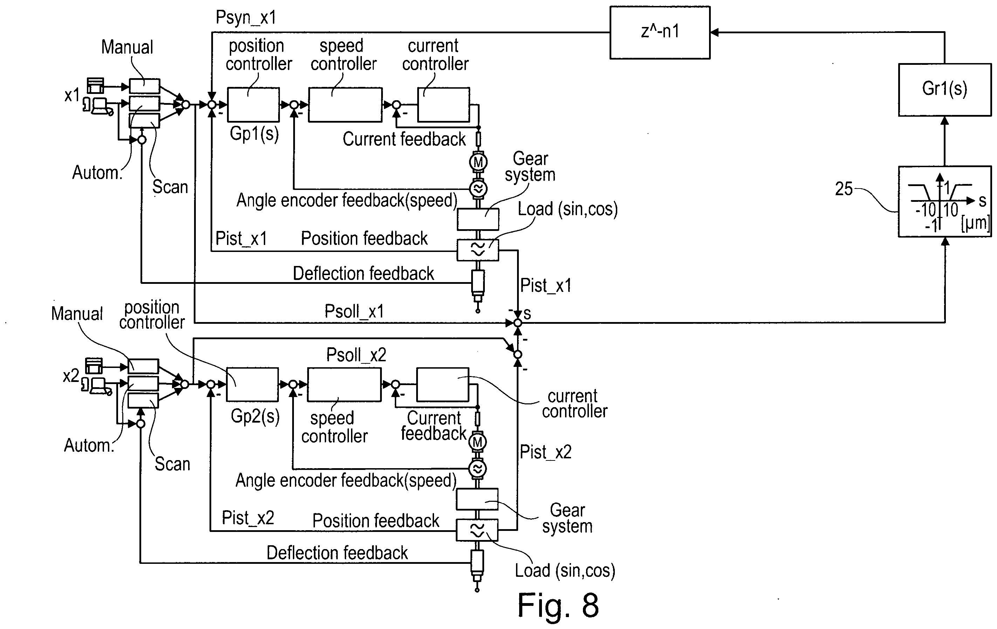

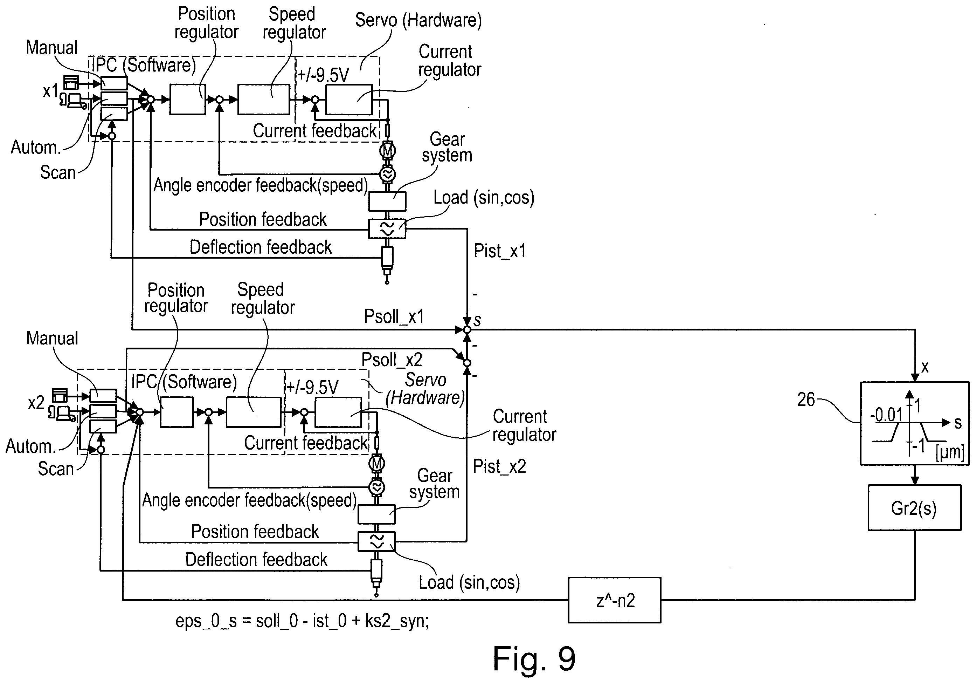

Fig. 8 und Fig. 9 zeigen jeweils für die x1-Achse (Fig. 8) und die x2-Achse (Fig. 9) eine Ausführungsform des Regelungskonzeptes. Durch Offline-Messungen wird die Achse x1 oder x2 bestimmt, die den größeren Schleppfehler aufweist.

Gemäß Fig. 8 wird bei der Achse x1, die in diesem Fall den größeren Schleppfehler aufweist, mit dem Synchronitätsregler Gr1(s) der Sollwert Psoll_x1 derart manipuliert, dass der Sollwert Psoll_x1 durch Aufschalten von Psyn_x1 sowohl erhöht als auch erniedrigt werden kann. Dieser geänderte Sollwert Psoll_x1+Psyn_x1 wird der Achse x1 über den Positionsregler Gp1(s) aufgeschaltet.

Gemäß Fig. 9 wird bei der Achse x2, die in diesem Fall den größeren Schleppfehler aufweist, mit dem Synchronitätsregler Gr2(s) der Sollwert Psoll_x2 derart manipuliert, dass der Sollwert Psoll_x2 durch Aufschalten von Psyn_x2 sowohl erhöht als auch erniedrigt werden kann. Dieser geänderte Sollwert Psoll_x2+Psyn_x2 wird der Achse x2 über den Positionsregler Gp2(s) aufgeschaltet.

Somit kann gemäß den Fig. 8 oder 9 die Achse x1, x2 durch den Synchronitätsregler sowohl beschleunigt als auch gebremst werden, wobei dies über die nichtlineare Kennlinie 25, 26 ohne das Hervorrufen von Hystereseeffekten erfolgt.

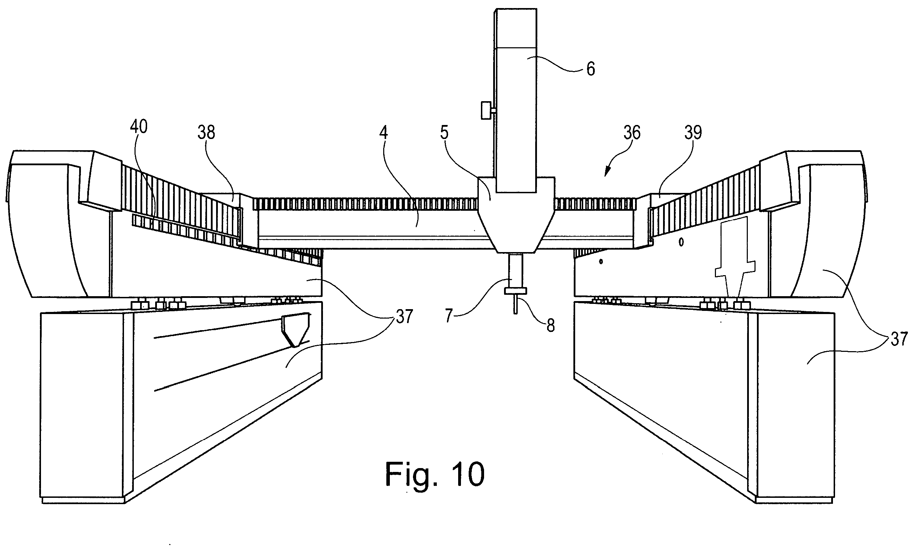

Fig. 10 zeigt ein Koordinatenmessgerät 36 in Brückenbauweise. Das Koordinatenmessgerät 36 weist ein Portal 37 auf, welches feststehend ausgebildet ist. Über ein erstes und ein zweites Traversenlager 38, 39 ist die Traverse 4 an dem Portal 37 gelagert. Die Traverse 4 bewegt sich in X-Richtung. An der Traverse 4 ist der Schlitten 5 in Y-Richtung beweglich gelagert. An dem Schlitten 5 ist die Pinole 6 in Z-Richtung beweglich angeordnet. An der Pinole 6 ist der Tastkopf 7 mit einem Taststift 8 angeordnet.

Die Traversenlager 38, 39 weisen jeweils einen Antrieb auf (nicht dargestellt). Für beide Traversenlager 38, 39 ist jeweils ein Maßstab vorgesehen. In Fig. 10 ist lediglich der Maßstab 40 schematisch dargestellt.

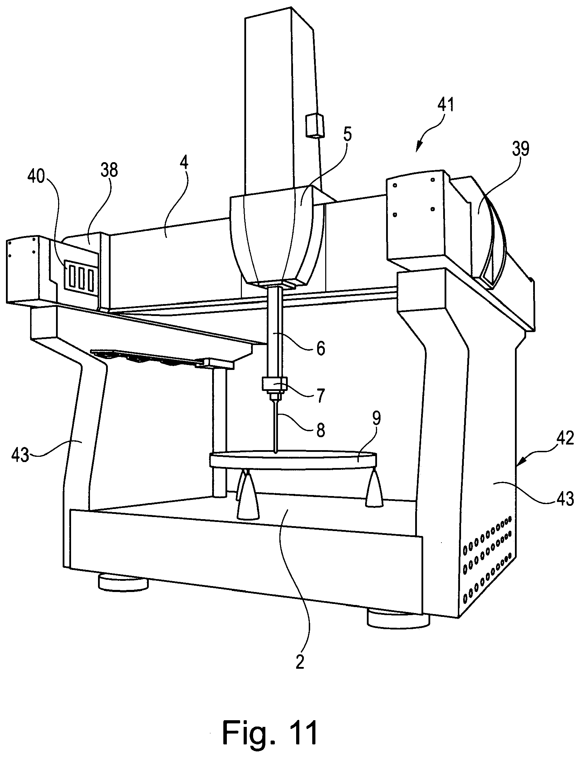

Fig. 11 zeigt ein Koordinatenmessgerät 41 in Brückenbauweise. Das Koordinatenmessgerät 41 weist ein U-förmig ausgebildetes Portal 42 mit Portalstützen 43 auf, welches feststehend ausgebildet ist. Über ein erstes und ein zweites Traversenlager 38, 39 ist die Traverse 4 an dem Portal 42 gelagert. Die Traverse 4 bewegt sich in X-Richtung. An der Traverse 4 ist der Schlitten 5 in Y-Richtung beweglich gelagert. An dem Schlitten 5 ist die Pinole 6 in Z-Richtung beweglich angeordnet. An der Pinole 6 ist der Tastkopf 7 mit einem Taststift 8 angeordnet.

Ein Werkstück 9 ist auf dem Grundbett 2 des Portales 42 angeordnet.

Die Traversenlager 38, 39 weisen jeweils einen Antrieb auf (nicht dargestellt). Für beide Traversenlager 38, 39 ist jeweils ein Maßstab vorgesehen. In Fig. 11 ist lediglich der Maßstab 40 schematisch dargestellt.

### Bezugszahlen

- 1: Koordinatenmessgerät
- 2: Grundbett
- 3: Portal
- 4: Traverse
- 5: Schlitten
- 6: Pinole
- 7: Tastkopf
- 8: Taststift
- 9: Werkstück
- 10: Maßstab
- 11: Maßstab
- 12: Maßstab
- 13: Portalfuß
- 14: Portalfuß
- 15: Gebervorrichtung
- 16: Gebervorrichtung
- 17: Gebervorrichtung
- 18: Steuereinrichtung
- 19: Maßstab
- 20: Gebervorrichtung
- 21: Antrieb
- 22: Antrieb
- 23: Stütze
- 24: Stütze
- 25: nichtlineare Reglerkennlinie
- 26: nichtlineare Reglerkennlinie
- 27: Verzögerungsglied
- 28: Verzögerungsglied
- 29: Kennlinienglied
- 30: Kennlinienglied
- 31: Fallunterscheidungsfunktion
- 32: Flanke
- 33: Kennlinienglied
- 34: Kennlinienglied
- 35: Flanke
- 36: Koordinatenmessgerät
- 37: Portal
- 38: Traversenlager
- 39: Traversenlager
- 40: Maßstab
- 41: Koordinatenmessgerät
- 42: Portal
- 43: Portalstützen

- Gr1(s): Synchronitätsregler
- Gr2(s): Synchronitätsregler
- Gp1(s): Positionsregler
- Gp2(s): Positionsregler
- x1: Achse
- x2: Achse
- Psoll_x1: Positionssollwert
- Psoll_x2: Positionssollwert
- Pist_x1: Positionsistwert
- Pist_x2: Positionsistwert
- Psyn_x1: Positionsaufschaltwert für Achse x1
- Psyn_x2: Positionsaufschaltwert für Achse x2

## Patentansprüche

1. Verfahren zum Betrieb eines Koordinatenmessgerätes (1)
- mit einem Grundbett (2) zur Lagerung eines zu vermessenden Werkstückes (9),
- mit einer Mechanik zur Bewegung eines Sensors (7) in zumindest einer ersten Koordinatenrichtung und einer senkrecht dazu stehenden zweiten Koordinatenrichtung,
- wobei die Mechanik einen ersten und einen zweiten Portalfuß (13, 14) oder ein erstes und ein zweites Traversenlager (38, 39) umfasst, die entlang von zwei paralle-len, auf gegenüberliegenden Seiten des Grundbettes (2) angeordneten Führungen in der ersten Koordinatenrichtung geführt sind,
- wobei der erste Portalfuß (13) oder das erste Traversenlager (38) von einem ersten Antrieb (21) und der zweite Portalfuß (14) oder das zweite Traversenlager (39) von einem zweiten Antrieb (22) angetrieben werden,
- wobei die Antriebe (21, 22) von einer Steuerung (18) mit wenigstens einem Synchronitätsregler gesteuert werden,
- bei dem eine Synchronisationsfehlerkorrektur der Antriebe (21, 22) des Koordinatenmessgerätes (1) durchgeführt wird,
**dadurch gekennzeichnet,**
- **dass** an jedem Antrieb (21, 22) mit einem Messystem ein Positionsistwert (Pist_x1, Pist_x2) des Antriebes erfasst wird,
- **dass** für den ersten Portalfuß (13) oder das erste Traversenlager (38) ein Schleppfehler aus einer Differenz zwischen einem Positionssollwert (Psoll_x1) und dem Positionsistwert (Pist_x1) berechnet wird,
- **dass** für den zweiten Portalfuß (14) oder das zweite Traversenlager (39) ein Schleppfehler aus einer Differenz zwischen einem Positionssollwert (Psoll_x2) und dem Positionsistwert (Pist_x2) berechnet wird,
- **dass** von der Steuerung eine Differenz aus den beiden Schleppfehlern berechnet wird,
- **dass** die Differenz aus den beiden Schleppfehlern mit einem vorgegebenen Differenzsollwert verglichen wird,
- und **dass** bei Überschreiten des Differenzsollwertes der Positionssollwert (Psoll_x1, Psoll_x2), wenigstens eines Antriebes (21,22) geändert wird.

2. Verfahren nach Anspruch 1, **dadurch gekennzeichnet, dass** der Positionssollwert (Psoll_x1) des ersten Antriebes (21) und/oder der Positionssollwert (Psoll_x2) des zweiten Antriebes (22) geändert wird.

3. Verfahren nach Anspruch 1 oder 2, **dadurch gekennzeichnet, dass** die Differenz aus den beiden Schleppfehlern in einen ersten Synchronitätsregler (Gr1(s)) des ersten Portalfußes (13) oder des ersten Traversenlagers (38) und/oder in einen zweiten Synchronitätsregler (Gr2(s)) des zweiten Portalfußes (14) oder des zweiten Traversenlagers (39) von der Steuerung (18) eingespeist wird.

4. Verfahren nach Anspruch 1, **dadurch gekennzeichnet, dass** der Schleppfehler des ersten Portalfußes (13) oder des ersten Traversenlagers (38) und der Schleppfehler des zweiten Portalfußes (14) oder des zweiten Traversenlagers (39) bestimmt werden, dass der Positionssollwert (Psoll_x1, Psoll_x2) des Portalfußes (13, 14) oder des Traversenlagers (38, 39), der oder das den größeren Schleppfehler aufweist, geändert wird, und dass der Positionssollwert (Psoll_x1, Psoll_x2) des Portalfußes (13, 14) oder des Traversenlagers (38, 39), der oder das den kleineren Schleppfehler aufweist, gleichbleibend gehalten wird.

5. Verfahren nach einem der vorhergehenden Ansprüche, **dadurch gekennzeichnet, dass** die Schleppfehler des ersten und des zweiten Portalfußes (13, 14) oder des ersten und des zweiten Traversenlagers (38, 39) kontinuierlich während des Verfahrens der beiden Portalfüße (13, 14) oder der zwei Traversenlager (38, 39) bestimmt werden und dass der Positionssollwert (Psoll_x1, Psoll_x2) des Portalfußes (13, 14)oder des Traversenlagers (38, 39) geändert wird, der aktuell den größeren Schleppfehler aufweist.

6. Verfahren nach einem der vorhergehenden Ansprüche, **dadurch gekennzeichnet, dass** von dem ersten oder dem zweiten Synchronitätsregler (Gr1(s), Gr2(s)) die Positionssollwerte entweder von dem ersten Portalfuß (13) oder von dem zweiten Portalfuß (14) geändert werden, oder dass von dem ersten oder dem zweiten Synchronitätsregler (Gr1(s), Gr2(s)) die Positionssollwerte entweder von dem ersten Traversenlager (38) oder von dem zweiten Traversenlager (39) geändert werden.

7. Verfahren nach Anspruch 6, **dadurch gekennzeichnet, dass** die Positionssollwerte (Psoll_x1, Psoll_x2) durch den jeweiligen dem ersten oder dem zweiten Portalfuß (13, 14) oder durch den jeweiligen dem ersten oder dem zweiten Traversenlager (38, 39) zugeordneten Synchronitätsregler (Gr1(s), Gr2(s)) durch Einspeisen eines Korrekturwertes in einen Positionsregler des ersten oder in einen Positionsregler des zweiten Portalfußes (13, 14) geändert werden oder durch Einspeisen eines Korrekturwertes in einen Positionsregler des ersten oder in einen Positionsregler des zweiten Traversenlagers (38, 39) geändert werden.

8. Verfahren nach Anspruch 1, **dadurch gekennzeichnet, dass** durch Messungen der eine Portalfuß (13) oder das eine Traversenlager (38) bestimmt wird, der über einen vorgegebenen Verfahrweg im Mittel den größeren Schleppfehler aufweist, und dass ausschließlich der Positionssollwert (Psoll_x1) des Portalfußes (13) oder des Traversenlagers (38) mit dem im Mittel größeren Schleppfehler mittels des Synchronitätsreglers (Gr1(s)) geändert wird.

9. Verfahren nach Anspruch 1, **dadurch gekennzeichnet, dass** der Positionssollwert (Psoll_x1) des einen Portalfußes (13) oder des einen Traversenlagers (38) ausschließlich erhöht und/oder der Positionssollwert (Psoll_x2) des anderen Portalfußes (14) oder des anderen Traversenlagers (39) ausschließlich verringert wird.

10. Verfahren nach einem der vorhergehenden Ansprüche, **dadurch gekennzeichnet, dass** eine Änderung des Positionssollwertes (Psoll_x1, Psoll_x2) des ersten und/oder des zweiten Portalfußes (13, 14) oder des ersten und/oder des zweiten Traversenlagers (38, 39) mit einer nichtlinearen Reglerkennlinie (25, 26) des ersten und/oder des zweiten Synchronitätsreglers (Gr1(s), Gr2(s)) durchgeführt wird.

11. Verfahren nach Anspruch 10, **dadurch gekennzeichnet, dass** die Reglerkennlinie (25, 26) wenigstens eine senkrechte und/oder wenigstens eine linear ansteigende Flanke (32, 35) aufweist.

12. Verfahren nach einem der vorhergehenden Ansprüche, **dadurch gekennzeichnet, dass** berechnete Korrekturwerte des Positionssollwertes (Psoll_x1, Psoll_x2) mit Verzögerungsgliedern (27, 28) n-ter Ordnung in wenigstens einen Positionsregler (Gp1(s), Gp2(s)) eingespeist werden, um Phasenverschiebungen, die durch zeitverzögertes mechanisches Ansprechen der beiden Portalfüße (13, 14) oder der beiden Traversenlager (38, 39) entstehen, zu verringern.

13. Koordinatenmessgerät in Portalbauweise oder in Brückenbauweise,
- mit einem Grundbett (2) zur Lagerung eines zu vermessenden Werkstückes (9),
- mit einer Mechanik zur Bewegung eines Sensors (7) in zumindest einer ersten Koordinatenrichtung und einer senkrecht dazu stehenden zweiten Koordinatenrichtung,
- wobei die Mechanik bei dem Koordinatenmessgerät (1) in Portalbauweise einen ersten und einen zweiten Portalfuß (13, 14) aufweist, die entlang von zwei parallelen, auf gegenüberliegenden Seiten des Grundbettes (2) angeordneten Führungen in der ersten Koordinatenrichtung verfahrbar gelagert sind, oder wobei die Mechanik bei dem Koordinatenmessgerät (36, 41) in Brückenbauweise ein erstes und ein zweites Traversenlager (38, 39) aufweist, die entlang von zwei parallelen auf einem Portal (37, 42) angeordneten Führungen in der ersten Koordinatenrichtung verfahrbar gelagert sind,
- wobei für den ersten Portalfuß (13) ein erster Antrieb (21) und für den zweiten Portalfuß (14) ein zweiter Antrieb (22) vorgesehen ist, oder für das erste Traversenlager (38) ein erster Antrieb und für das zweite Traversenlager (39) ein zweiter Antrieb vorgesehen ist,
- wobei für die Antriebe (21, 22) eine Steuerung (18) vorgesehen ist,
- und wobei für jeden Antrieb (21, 22) wenigstens ein Synchronitätsregler vorgesehen ist,
**dadurch gekennzeichnet, dass** die Steuerung (18) jeweils wenigstens einen zusätzlichen Synchronitätsregler (Gr1(s), Gr2(s)) zur Regelung des Positionssollwertes (Psoll_x1, Psoll_x2) für jeden Antrieb der beiden Portalfüße oder für jeden Antrieb der beiden Traversenlager (38, 39) aufweist.

14. Koordinatenmessgerät nach Anspruch 13, **dadurch gekennzeichnet, dass** die zusätzlichen Synchronitätsregler (Gr1(s), Gr2(s)) als Positionssollwerte (Psoll_x1, Psoll_x2) der Portalfüße (13, 14) oder der Traversenlager (38, 39) regelnde Synchronitätsregler (Gr1(s), Gr2(s)) ausgebildet sind.

15. Koordinatenmessgerät nach Anspruch 13 oder 14, **dadurch gekennzeichnet, dass** die zusätzlichen Synchronitätsregler (Gr1(s), Gr2(s)) nichtlineare Reglerkennlinien (25, 26) aufweisen.

16. Koordinatenmessgerät nach Anspruch 15, **dadurch gekennzeichnet, dass** die nichtlineare Reglerkennlinie (25, 26) eine Totzone ohne Regelung aufweist.

17. Koordinatenmessgerät nach Anspruch 13, **dadurch gekennzeichnet, dass** zwei Positionsencoder vorgesehen sind.

## Claims

1. Method for operating a coordinate measuring machine (1)
- comprising a main bed (2) for supporting a workpiece (9) to be measured,
- comprising a mechanism for moving a sensor (7) in at least one first coordinate direction and one second coordinate direction perpendicular thereto,
- the mechanism comprising a first and a second bridge base (13, 14) or a first and a second cross-beam bearing (38, 39) which are guided in the first coordinate direction along two parallel guides arranged on opposite sides of the main bed (2),
- the first bridge base (13) or the first cross-beam bearing (38) being driven by a first drive (21), and the second bridge base (14) or the second cross-beam bearing (39) being driven by a second drive (22),
- the drives (21, 22) being controlled by a control unit (18) having at least one synchronism controller,
- during which a synchronisation error of the drives (21, 22) of the coordinate measuring machine (1) is corrected,
**characterised in that**
- at each drive (21, 22), an actual position value (Pist_x1, Pist_x2) of the drive is detected using a measuring system,
- for the first bridge base (13) or the first cross-beam bearing (38), a position lag is calculated from a difference between a target position value (Psoll_x1) and the actual position value (Pist_x1),
- for the second bridge base (14) or the second cross-beam bearing (39), a position lag is calculated from a difference between a target position value (Psoll_x2) and the actual position value (Pist_x2),
- a difference between the two position lags is calculated by the control unit,
- the difference between the two position lags is compared with a predetermined target difference value,
- and if the target difference value is exceeded, the target position value (Psoll_x1, Psoll_x2) of at least one drive (21, 22) is changed.

2. Method according to claim 1, **characterised in that** the target position value (Psoll_x1) of the first drive (21) and/or the target position value (Psoll_x2) of the second drive (22) is/are changed.

3. Method according to claim 1 or claim 2, **characterised in that** the control unit (18) feeds the difference between the two position lags into a first synchronism controller (Gr1(s)) of the first bridge base (13) or of the first cross-beam bearing (38) and/or into a second synchronism controller (Gr2(s)) of the second bridge base (14) or of the second cross-beam bearing (39).

4. Method according to claim 1, **characterised in that** the position lag of the first bridge base (13) or of the first cross-beam bearing (38) and the position lag of the second bridge base (14) or of the second cross-beam bearing (39) are determined, **in that** the target position value (Psoll_x1, Psoll_x2) of that bridge base (13, 14) or that cross-beam bearing (38, 39) which has the greater position lag is changed, and **in that** the target position value (Psoll_x1, Psoll_x2) of that bridge base (13, 14) or that cross-beam bearing (38, 39) which has the smaller position lag is kept the same.

5. Method according to any of the preceding claims, **characterised in that** the position lag of the first and the second bridge base (13, 14) or of the first and the second cross-beam bearing (38, 39) is continuously determined while the two bridge bases (13, 14) or the two cross-beam bearings (38, 39) are in motion, and **in that** the target position value (Psoll_x1, Psoll_x2) of that bridge base (13, 14) or that cross-beam bearing (38, 39) which currently has the greater position lag is changed.

6. Method according to any of the preceding claims, **characterised in that** the first or the second synchronism controller (Gr1(s), Gr2(s)) changes the target position values of either the first bridge base (13) or the second bridge base (14), or **in that** the first or the second synchronism controller (Gr1(s), Gr2(s)) changes the target position values of either the first cross-beam bearing (38) or the second cross-beam bearing (39).

7. Method according to claim 6, **characterised in that** the relevant synchronism controller (Gr1(s), Gr2(s)) assigned to the first or the second bridge base (13, 14) or assigned to the first or the second cross-beam bearing (38, 39) changes the target position values (Psoll_x1, Psoll_x2) by feeding a correction value into a position controller of either the first or the second bridge base (13, 14) or by feeding a correction value into a position controller of either the first or the second cross-beam bearing (38, 39).

8. Method according to claim 1, **characterised in that** that bridge base (13) or that cross-beam bearing (38) which has the greater position lag on average over a predetermined travel path is determined using measurements, and **in that** the synchronism controller (Gr1(s)) changes only the target position value (Psoll_x1) of that bridge base (13) or that cross-beam bearing (38) which has the greater position lag on average.

9. Method according to claim 1, **characterised in that** the target position value (Psoll_x1) of said bridge base (13) or of said cross-beam bearing (38) is only increased, and/or the target position value (Psoll_x2) of the other bridge base (14) or of the other cross-beam bearing (39) is only reduced.

10. Method according to any of the preceding claims, **characterised in that** the target position value (Psoll_x1, Psoll_x2) of the first and/or of the second bridge base (13, 14) or of the first and/or of the second cross-beam bearing (38, 39) is changed using a non-linear controller characteristic curve (25, 26) of the first and/or of the second synchronism controller (Gr1(s), Gr2(s)).

11. Method according to claim 10, **characterised in that** the controller characteristic curve (25, 26) has at least one vertical flank and/or at least one linearly rising flank (32, 35).

12. Method according to any of the preceding claims, **characterised in that** calculated correction values of the target position value (Psoll_x1, Psoll_x2) are fed into at least one position controller (Gp1(s), Gp2(s)) by delay elements (27, 28) of the nth order in order to reduce phase shifts which result from a time-delayed mechanical response of the two bridge bases (13, 14) or the two cross-beam bearings (38, 39).

13. Bridge-type or gantry-type coordinate measuring machine
- comprising a main bed (2) for supporting a workpiece (9) to be measured,
- comprising a mechanism for moving a sensor (7) in at least one first coordinate direction and one second coordinate direction perpendicular thereto,
- the mechanism in the bridge-type coordinate measuring machine (1) having a first and a second bridge base (13, 14) which are borne so as to be movable in the first coordinate direction along two parallel guides arranged on opposite sides of the main bed (2), or the mechanism in the gantry-type coordinate measuring machine (36, 41) having a first and a second cross-beam bearing (38, 39) which are borne so as to be movable in the first coordinate direction along two parallel guides arranged on a bridge (37, 42),
- a first drive (21) being provided for the first bridge base (13) and a second drive (22) being provided for the second bridge base (14), or a first drive being provided for the first cross-beam bearing (38) and a second drive being provided for the second cross-beam bearing (39),
- a control unit (18) being provided for the drives (21, 22),
- and at least one synchronism controller being provided for each drive (21, 22), **characterised in that** the control unit (18) in each case has at least one additional synchronism controller (Gr1(s), Gr2(s)) for controlling the target position value (Psoll_x1, Psoll_x2) for each drive of the two bridge bases or for each drive of the two cross-beam bearings (38, 39).

14. Coordinate measuring machine according to claim 13, **characterised in that** the additional synchronism controllers (Gr1(s), Gr2(s)) are formed as synchronism controllers (Gr1(s), Gr2(s)) that control target position values (Psoll_x1, Psoll_x2) of the bridge bases (13, 14) or of the cross-beam bearings (38, 39).

15. Coordinate measuring machine according to claim 13 or claim 14, **characterised in that** the additional synchronism controllers (Gr1(s), Gr2(s)) have non-linear controller characteristic curves (25, 26).

16. Coordinate measuring machine according to claim 15, **characterised in that** the non-linear controller characteristic curve (25, 26) has a dead zone without any control.

17. Coordinate measuring machine according to claim 13, **characterised in that** two position encoders are provided.

## Revendications

1. Procédé de fonctionnement d'un appareil de mesure de coordonnées (1)
- avec un bâti de base (2) permettant la mise en place d'une pièce à mesurer (9),
- avec un mécanisme permettant de déplacer un capteur (7) dans au moins une première direction de coordonnées et une seconde direction de coordonnées perpendiculaire à celle-ci,
- dans lequel le mécanisme comprend des premier et second pieds de portique (13, 14) ou des premier et second paliers de traverse (38, 39), qui sont guidés dans la première direction de coordonnées le long de deux guides parallèles agencés sur des côtés opposés du bâti de base (2),
- dans lequel le premier pied de portique (13) ou le premier palier de traverse (38) est entraîné par un premier entraînement (21) et le second pied de portique (14) ou le second palier de traverse (39) est entraîné par un second entraînement (22),
- dans lequel les entraînements (21, 22) sont commandés par une commande (18) comprenant au moins un régulateur de synchronisation,
- avec lequel une correction d'erreur de synchronisation des entraînements (21, 22) de l'appareil de mesure de coordonnées (1) est effectuée,
**caractérisé en ce que**
- une valeur réelle de position (Pist_x1, Pist_x2) de l'entraînement est enregistrée avec un système de mesure au niveau de chaque entraînement (21, 22),
- pour le premier pied de portique (13) ou le premier palier de traverse (38), une erreur de poursuite est calculée à partir de la différence entre une valeur de consigne de position (Psoll_x1) et la valeur réelle de position (Pist_x1),
- pour le second pied de portique (14) ou le second palier de traverse (39), une erreur de poursuite est calculée à partir de la différence entre une valeur de consigne de position (Psoll_x2) et la valeur réelle de position (Pist_x2),
- une différence est calculée par la commande à partir des deux erreurs de poursuite,
- la différence entre les deux erreurs de poursuite est comparée à une valeur de consigne de différence prédéfinie,
- et, en cas de dépassement de la valeur de consigne de différence, la valeur de consigne de position (Psoll_x1, Psoll_x2) d'au moins un entraînement (21,22) est modifiée.

2. Procédé selon la revendication 1, **caractérisé en ce que** la valeur de consigne de position (Psoll_x1) du premier entraînement (21) et/ou la valeur de consigne de position (Psoll_x2) du second entraînement (22) est/sont modifiée(s).

3. Procédé selon la revendication 1 ou 2, **caractérisé en ce que** la différence entre les deux erreurs de poursuite est introduite par la commande (18) dans un premier régulateur de synchronisation (Gr1(s)) du premier pied de portique (13) ou du premier palier de traverse (38) et/ou dans un second régulateur de synchronisation (Gr2(s)) du second pied de portique (14) ou du second palier de traverse (39).

4. Procédé selon la revendication 1, **caractérisé en ce que** l'erreur de poursuite du premier pied de portique (13) ou du premier palier de traverse (38) et l'erreur de poursuite du second pied de portique (14) ou du second palier de traverse (39) sont déterminées, **en ce que** la valeur de consigne de position (Psoll_x1, Psoll_x2) du pied de portique (13, 14) ou du palier de traverse (38, 39) qui présente l'erreur de poursuite la plus grande est modifiée, et **en ce que** la valeur de consigne de position (Psoll_x1, Psoll_x2) du pied de portique (13, 14) ou du palier de traverse (38, 39) qui présente l'erreur de poursuite la moins grande est maintenue constante.

5. Procédé selon l'une quelconque des revendications précédentes, **caractérisé en ce que** les erreurs de poursuite des premier et second pieds de portique (13, 14) ou des premier et second paliers de traverse (38, 39) sont déterminées en continu pendant le déplacement des deux pieds de portique (13, 14) ou des deux paliers de traverse (38, 39) et **en ce que** la valeur de consigne de position (Psoll_x1, Psoll_x2) du pied de portique (13, 14) ou du palier de traverse (38, 39) qui présente actuellement l'erreur de poursuite la plus grande est modifiée.

6. Procédé selon l'une quelconque des revendications précédentes, **caractérisé en ce que** les valeurs de consigne de position du premier pied de portique (13) ou du second pied de portique (14) sont modifiées par le premier ou le second régulateur de synchronisation (Gr1(s), Gr2(s)), ou **en ce que** les valeurs de consigne de position du premier palier de traverse (38) ou du second palier de traverse (39) sont modifiées par le premier ou le second régulateur de synchronisation (Gr1(s), Gr2(s)).

7. Procédé selon la revendication 6, **caractérisé en ce que** les valeurs de consigne de position (Psoll_x1, Psoll_x2) sont modifiées grâce au régulateur de synchronisation (Gr1(s), Gr2(s)) respectivement associé au premier ou au second pied de portique (13, 14) ou respectivement associé au premier ou au second palier de traverse (38, 39) en introduisant une valeur de correction dans un régulateur de position du premier ou second pied de portique (13, 14) ou en introduisant une valeur de correction dans un régulateur de position du premier ou second palier de traverse (38, 39).

8. Procédé selon la revendication 1, **caractérisé en ce que** le pied de portique (13) ou le palier de traverse (38) qui présente l'erreur de poursuite la plus grande en moyenne sur un trajet de déplacement prédéfini est déterminé grâce à des mesures, et **en ce que** seule la valeur de consigne de position (Psoll_x1) du pied de portique (13) ou du palier de traverse (38) présentant l'erreur de poursuite la plus grande en moyenne est modifiée au moyen du régulateur de synchronisation (Gr1(s)).

9. Procédé selon la revendication 1, **caractérisé en ce que** la valeur de consigne de position (Psoll_x1) d'un pied de portique (13) ou d'un palier de traverse (38) est augmentée de manière exclusive et/ou la valeur de consigne de position (Psoll_x2) de l'autre pied de portique (14) ou de l'autre palier de traverse (39) est diminuée de manière exclusive.

10. Procédé selon l'une quelconque des revendications précédentes, **caractérisé en ce qu'**une modification de la valeur de consigne de position (Psoll_x1, Psoll_x2) du premier et/ou du second pied de portique (13, 14) ou du premier et/ou du second palier de traverse (38, 39) est effectuée en suivant une courbe caractéristique de régulateur (25, 26) non linéaire du premier et/ou du second régulateur de synchronisation (Gr1(s), Gr2(s)).

11. Procédé selon la revendication 10, **caractérisé en ce que** la courbe caractéristique de régulateur (25, 26) présente au moins une pente verticale et/ou au moins une pente (32, 35) linéairement ascendante.

12. Procédé selon l'une quelconque des revendications précédentes, **caractérisé en ce que** des valeurs de correction calculées de la valeur de consigne de position (Psoll_x1, Psoll_x2) sont introduites avec des éléments de retard (27, 28) d'ordre n dans au moins un régulateur de position (GP1(s), GP2(s)) afin de réduire les déphasages résultant de la réponse mécanique retardée des deux pieds de portique (13, 14) ou des deux paliers de traverse (38, 39).

13. Appareil de mesure de coordonnées dans une configuration de construction de type portique ou pont,
- avec un bâti de base (2) permettant la mise en place d'une pièce à mesurer (9),
- avec un mécanisme permettant de déplacer un capteur (7) dans au moins une première direction de coordonnées et une seconde direction de coordonnées perpendiculaire à celle-ci,
- dans lequel le mécanisme, dans le cas de l'appareil de mesure de coordonnées (1) dans une configuration de construction de type portique, présente des premier et second pieds de portique (13, 14) qui sont montés mobiles dans la première direction de coordonnées le long de deux guides parallèles agencés sur des côtés opposés du bâti de base (2), ou dans lequel le mécanisme, dans le cas de l'appareil de mesure de coordonnées (36, 41) dans une configuration de construction de type pont, présente des premier et second paliers de traverse (38, 39) qui sont montés mobiles dans la première direction de coordonnées le long de deux guides parallèles agencés sur un portique (37, 42),
- dans lequel un premier entraînement (21) est prévu pour le premier pied de portique (13) et un second entraînement (22) est prévu pour le second pied de portique (14), ou un premier entraînement est prévu pour le premier palier de traverse (38) et un second entraînement est prévu pour le second palier de traverse (39),
- dans lequel une commande (18) est prévue pour les entraînements (21, 22),
- et dans lequel au moins un régulateur de synchronisation est prévu pour chaque entraînement (21, 22),
**caractérisé en ce que** la commande (18) présente respectivement au moins un régulateur de synchronisation (Gr1(s), Gr2(s)) supplémentaire permettant de réguler la valeur de consigne de position (Psoll_x1, Psoll_x2) pour chaque entraînement des deux pieds de portique ou pour chaque entraînement des deux paliers de traverse (38, 39).

14. Appareil de mesure de coordonnées selon la revendication 13, **caractérisé en ce que** les régulateurs de synchronisation (Gr1(s), Gr2(s)) supplémentaires sont réalisés sous la forme de régulateurs de synchronisation (Gr1(s), Gr2(s)) régulant des valeurs de consigne de position (Psoll_x1, Psoll_x2) des pieds de portique (13, 14) ou des paliers de traverse (38, 39).

15. Appareil de mesure de coordonnées selon la revendication 13 ou 14, **caractérisé en ce que** les régulateurs de synchronisation (Gr1(s), Gr2(s)) supplémentaires présentent des courbes caractéristiques de régulateur (25, 26) non linéaires.

16. Appareil de mesure de coordonnées selon la revendication 15, **caractérisé en ce que** la courbe caractéristique de régulateur (25, 26) non linéaire présente une zone morte sans régulation.

17. Appareil de mesure de coordonnées selon la revendication 13, **caractérisé en ce que** deux codeurs de position sont prévus.
